# EUROPÄISCHE PATENTSCHRIFT

(11) **EP 2 144 764 B1**
(45) Veröffentlichungstag und Bekanntmachung des Hinweises auf die Patenterteilung: **03.11.2010**
(21) Anmeldenummer: 07725035.5
(22) Anmeldetag: 09.05.2007
(51) Int. Cl.: B41M 5/26, B65D 33/00, C08K 3/08, C08K 7/18

(54) **VERWENDUNG VON SPHÄRISCHEN METALLPARTIKELN ALS LASERMARKIERUNGSADDITIVE FÜR DICHTUNGS-, VERSCHLUSS- ODER BESCHICHTUNGSMATERIALIEN ODER LACKE**
USE OF SPHERICAL METAL PARTICLES AS LASER MARKING ADDITIVES FOR SEALING, CLOSURE OR COATING MATERIALS OR PAINTS
UTILISATION DE PARTICULES MÉTALLIQUES SPHÉRIQUES COMME ADDITIFS DE REPÉRAGE PAR LASER POUR MATÉRIAUX D'ÉTANCHÉITÉ, DE FERMETURE OU DE REVÊTEMENT OU POUR VERNIS

(43) Veröffentlichungstag der Anmeldung: 20.01.2010
(73) Patentinhaber: ACTEGA DS GmbH, 28219 Bremen (DE)
(72) Erfinder: COULTER, William, David, 28816 Stellersee (DE); WITTENBERG, Rüdiger, 28215 Bremen (DE)
(74) Vertreter: Maiwald, Walter
(86) Internationale Anmeldenummer: PCT/EP2007/004113
(87) Internationale Veröffentlichungsnummer: WO 2008/138362

(56) Entgegenhaltungen:
- EP-A- 1 145 864
- WO-A-2005/047009
- DE-A1-102004 053 376

## Beschreibung

Die Erfindung betrifft die Verwendung von sphärischen Metallpartikeln als Additiv für die Lasermarkierung von Dichtungs-, Verschluss-, oder Beschichtungsmaterialien oder Lacken aus Kunststoffen. Die Erfindung betrifft ferner ein lasermarkierbares Dichtungs- oder Verschlussmaterial aus Kunststoff und ein Beschichtungsmaterial oder einen Lack aus Kunststoff, die jeweils ein Lasermarkierungsadditiv gemäß der vorliegenden Erfindung enthalten.

Die Kennzeichnung von Kunststoffen durch Lasermarkierung wie auch das Schweißen von Kunststoffteilen mittels Laserenergie ist an sich bekannt. Beides wird durch Absorption der Laserenergie im Kunststoffmaterial entweder direkt durch Wechselwirkung mit dem Polymer oder indirekt mit einem dem Kunststoffmaterial zugesetzten lasersensitiven Mittel bewirkt. Das lasersensitive Mittel kann ein organischer Farbstoff oder ein Pigment sein, welches durch Absorption der Laserenergie eine lokale sichtbare Verfärbung des Kunststoffes bewirkt. Es kann auch eine Verbindung sein, die bei Bestrahlung mit Laserlicht von einer unsichtbaren, farblosen in eine sichtbare Form umgewandelt wird. Beim Laserschweißen wird das Kunststoffmaterial durch Absorption der Laserenergie im Fügebereich so stark erwärmt, dass das Material aufschmilzt und beide Teile miteinander verschweißen.

Die Kennzeichnung von Produktionsgütern wird im Zuge der allgemeinen Rationalisierungsmaßnahmen in nahezu allen Industriezweigen zunehmend wichtiger. So müssen etwa Produktionsdaten, Chargennummern, Verfallsdaten, Produktkennungen, Barcodes, Firmenlogos etc. aufgebracht werden. Gegenüber konventionellen Kennzeichnungstechniken wie Drucken, Prägen, Stempeln, Etikettieren ist die Lasermarkierung deutlich schneller, da berührungslos arbeitend, präziser und ohne weiteres auch auf nicht planen Oberflächen aufzubringen. Da die Lasermarkierungen unter der Oberfläche im Material erzeugt werden, sind diese dauerhaft, haltbar und wesentlich sicherer gegenüber Entfernung, Veränderung oder gar Fälschung. Kontakt mit anderen Medien, etwa bei Flüssigkeitsbehältern und Verschlüssen, ist aus diesem Grund - unter der selbstverständlichen Voraussetzung, dass die Kunststoffmatrix beständig ist - ebenfalls unkritisch. Sicherheit und Dauerhaftigkeit von Produktionskennungen sowie Kontaminationsfreiheit sind äußerst wichtig etwa bei Verpackungen von Pharmazeutika, Lebensmitteln und Getränken.

Die Lasermarkierungstechnologie hat sich insbesondere im Zusammenhang mit der Markierung von Kunststoffen als sehr geeignet erwiesen. Um eine effiziente Markierung von Kunststoffen durchführen zu können, ist es erforderlich, eine ausreichende Wechselwirkung zwischen dem zu markierenden Kunststoff und dem Laserlicht zu erzeugen. Dabei ist darauf zum einen zu achten, dass die in den Kunststoff eingebrachte Energie nicht zu hoch ist, weil dadurch der Kunststoffgegenstand bzw. dessen Textur zerstört werden kann. Auf der anderen Seite darf der Laserstrahl nicht ohne signifikante Wechselwirkung durch den Kunststoff hindurchtreten, da in diesem Fall keine Kennzeichnung des Kunststoffes möglich ist.

Um die Wechselwirkung des Laserstrahles mit dem Kunststoff zu erhöhen, werden Kunststoffe verwendet, in die Absorptionsmittel, auch als Absorber bezeichnet, eingearbeitet sind. Diese Absorptionsmittel können bspw. lasermarkierbare Polymere oder aber auch Perlglanzpigmente und Metalleffektpigmente sein.

Im Falle von Perlglanzpigmenten und Metalleffektpigmenten kommt es zu einer Erhitzung dieser Pigmente durch die Einstrahlung von Laserlicht. In der unmittelbaren Umgebung der Perlglanzpigmente und der Metalleffektpigmente erfolgt dann eine thermische Veränderung des Kunststoffes, z.B. eine Carbonisierung oder ein Aufschäumen des Kunststoffes, wodurch eine Markierung oder Kennzeichnung des Kunststoffgegenstandes möglich ist.

Die DE 197 26 136 A1 offenbart die Verwendung von lasermarkierbaren Polymeren in Form von mikrovermahlenen Partikeln mit einer Teilchengröße von 0,1 bis 100 µm. Nachteilig bei diesen lasermarkierbaren Polymeren ist, dass diese während der Verarbeitung des mit den lasermarkierbaren Polymeren dotierten Kunststoffen schmelzen können. Insoweit ist es erforderlich, dass die Schmelzbereiche des eingearbeiteten lasermarkierbaren Polymers und des verwendeten Kunststoffsystems aufeinander abgestimmt werden müssen.

Die DE 198 10 952 A1 offenbart die Verwendung von Perlglanzpigmenten oder Metallglanzpigmenten als Absorptionsmittel in Kunststoffen. Nachteilig bei der Verwendung von Perlglanzpigmenten oder Metallglanzpigmenten bzw. Metalleffektpigmenten ist, dass, um einen zufrieden stellenden Kontrast nach der Lasermarkierung zu erhalten, die Pigmentmenge entweder so hoch konzentriert werden muss, dass es zwangsläufig zu einer Einfärbung mit Perlglanz bzw. einer metallischer Einfärbung des Kunststoffes kommt.

Somit ist es bei Verwendung von Perlglanzpigmenten bzw. Metalleffektpigmenten in nicht zufrieden stellender Weise möglich, eine kontraststarke Lasermarkierung ohne merkbare Farbgebung im Falle von Perlglanzpigmenten (Perlglanzeffekt) bzw. ohne merkbare metallische Einfärbung im Falle von Metallglanz- bzw. Metalleffektpigmenten aufzubringen. Außerdem sind Metalleffektpigmente und Perlglanzpigmente relativ teuer.

Weiterhin führt die plättchenartige Struktur der Perlglanzpigmente bzw. der Metallglanz- oder Metalleffektpigmente nachteiligerweise dazu, dass sich die Pigmente während des Spritzgießens der Kunststoffmasse prozessbedingt auftretenden laminaren Strömung aufgrund ihrer plättchenartigen Struktur ausrichten, was zu Fließlinien oder Schlieren in dem hergestellten Kunststoffgegenstand führt.

Um einen gewünschten Kontrast bei der Lasermarkierung von Kunststoffen zu erhalten, wird gemäß der Lehre der EP 1 145 864 A1 ein Gemisch aus Metall- bzw. Halbmetallpulver und eines Effektpigmentes oder mehrerer Effektpigmente auf Basis von Schichtsilikaten verwendet. Auch hier erfolgt eine für klare und transparente Kunststoffe unerwünschte sichtbare Einfärbung bzw. metallische Einfärbung des Kunststoffes. Weiterhin werden durch die Perlglanzpigmente nachteiligerweise ebenfalls Schlieren bzw. Fließlinien in dem hergestellten Kunststoffgegenstand erzeugt.
In der DE 10 2004 053 376 A1 werden farbige Lasermarkierungen und Laserbeschriftungen von Kunststoffen beschrieben, die auf einer Verschweißung eines polymerhaltigen Beschriftungsmediums mit der Kunststoffoberfläche beruhen. In dieser Schrift werden u.a. auch kugelförmige Metallpulver als zur Markierung geeignete Energieabsorber erwähnt. Allerdings werden keine Angaben hinsichtlich der Größe der Metallpulver gemacht.

Gemäß der Lehre der DE 10 2004 045 305 A1 kann das im Stand der Technik bestehende Problem, dass die Absorber die zu beschriftenden Kunststoffe nachhaltig einfärben, dadurch behoben werden, dass in das Kunststoffmaterial eine Boridverbindung, vorzugsweise Lanthanhexaborid eingearbeitet wird. Nachteilig ist, dass diese Boridverbindungen, insbesondere Lanthanhexaborid, einen signifikanten Kostenfaktor darstellen. Insofern eignen sich diese Boridverbindungen nicht als ein in großem Umfang verwendbares Lasermarkierungsadditiv.

Um eine Markierung von transparenten Kunststoffmaterialien ohne Einfärbung zu ermöglichen, wird gemäß der Lehre der US 6,693,657 B2 sowie der WO 2005/047009 ein Lasermarkierungsadditiv verwendet, das ein Gemisch von Antimonoxid und Zinnoxid umfaßt. In der WO 2005/084956 sind hochtransparente Kunststoffmaterialien beschrieben, die mittels nanoskaliger Indium-Zinnoxid- oder Antimon-Zinnoxidteilchen lasermarkierbar und/oder laserschweißbar sind. Nachteilig ist, dass Antimonoxid wie jede andere Antimonverbindung toxisch ist. Insofern stellt dieses Lasermarkierungsadditiv zum einen bei der Herstellung und Verarbeitung als auch bei der Entsorgung ein zusätzlicher Aufwand für Umwelt und Mensch dar, da zunächst Antimon bzw. Antimon-haltige Verbindungen verwendet und schließlich die Kunststoffartikel, die Antimon und/oder Antimon-haltige Verbindungen aufweisen, wieder entsorgt werden müssen.

In der WO 2002/055287 A1 wird ein Verfahren zur Herstellung laserverschweißter Verbundformteile beschrieben. Hier werden Metallflocken und Metallpulver als Füllstoffe erwähnt. Diese werden allerdings in relativ hohen Konzentrationen vor 1 bis 60 Gew-%, bezogen auf das Kunststoffformteil, eingesetzt.
Die EP 0 947 352 A1 betrifft ein Verfahren zum Bedrucken der Innenseite eines Verschlussmittels aus HDPE oder Polypropylen mit Hilfe eines Laserstrahls. Das Kunststoffmaterial des Verschlussmittels umfasst zwischen 0,10 und 1,5 Gew-% eines den Laserstrahl absorbierenden Additivs. Als geeignetes Additiv wird TiO₂ und mit Antimon dotiertes ZnO₂ beschrieben. Form und Teilchengröße des Additivs werden nicht offenbart. Ebenso werden Metallpartikel nicht als das den Laserstrahl absorbierende Additiv beschrieben.

In der EP 1 475 238 A1 wird ein Verfahren zum Markieren eines Gegenstandes aus Polytetrafluorethylen, wie z.B. einem Dichtungsring, mittels Laserbestrahlung beschrieben. Gemäß dem Verfahren nach der EP 1 475 238 A1 ist kein Lasermarkierungsadditiv erforderlich. Es werden jedoch verschiedene Füllstoffe, wie z.B. Bronzepulver, beschrieben. Allerdings wird die Form und die Teilchengröße der Füllstoffe nicht offenbart.

Die WO 2006/067073 betrifft eine Beschichtungszusammensetzung zum Markieren von Substraten. Die Beschichtungszusammensetzungen umfassen einen Farbbildner in einer Menge von 0.01 bis 50 %, ein Metallsalz einer Carbonsäure in einer Menge von 0.01 bis 50 %, ein Bindemittel in einer Menge von 1 bis 80 % und ein organisches Lösungsmittel in einer Menge von 1 bis 99 %, jeweils bezogen auf das Gewicht der Zusammensetzung. Eine auf ein Substrat aufgebrachte Beschichtung kann vorzugsweise unter Verwendung von Laserstrahlung markiert werden. Die Verwendung von Metallpartikeln einer bestimmten Größe und Form wird in WO 2006/067073 nicht offenbart.

Die EP 0 993 964 betrifft eine Beschichtung für die Lasermarkierung aus einem Harz und einem aktivierbaren Farbstoffsystem. In der DE 101 36 479 wird eine farbige Beschriftung oder Markierung von Kunststoffen, Lacken, inklusive Pulverlacken, offenbart, wobei ein Farbmittel mit Hilfe einer Laserlicht absorbierenden Substanz durch Laserstrahlung in den Kunststoff oder Lack transferiert wird. Die DE 102 17 023 betrifft ein Polymerpulver zum Beschichten von metallischen Substraten, welches eine laserlichtaktive Verbindung enthält. Die Verwendung von Metallpartikeln, insbesondere sphärischen Metallpartikel einer definierten Größe, ist jedoch in den vorstehenden Patentanmeldungen nicht offenbart.

Aufgabe der vorliegenden Erfindung ist es, ein Lasermarkierungsadditiv bereitzustellen, das eine Markierung von Dichtungs-, Verschluss-, oder Beschichtungsmaterialien oder Lacken aus transparenten Kunststoffmaterialien mit gutem Kontrast, hoher Punktgenauigkeit bei schlierenfreier Einarbeitung ermöglicht. Vorzugsweise soll ein guter Kontrast erhalten werden, ohne dabei die Kunststoffmaterialien zwangsläufig einfärben zu müssen.

Eine weitere Aufgabe der Erfindung ist es, derartige Materialien bereitzustellen, die ein toxikologisch unbedenkliches Lasermarkierungsadditiv enthalten, das preisgünstig und in großen Mengen zur Verfügung steht.

Noch eine weitere Aufgabe der Erfindung ist es, derartige Materialien bereitzustellen, die ein Lasermarkierungsadditiv enthalten, das eine abbildungsscharfe Kennzeichnung nach Einstrahlung von Laserlicht ermöglicht.

Eine weitere Aufgabe ist es, derartige Materialien bereitzustellen, die ein Lasermarkierungsadditiv enthalten, welches praktisch keine Eintrübungen oder Einfärbungen durch das Lasermarkierungsadditiv aufweist.

Die der Erfindung zugrunde liegende Aufgabe wird gelöst durch Verwendung von sphärischen Metallpartikeln, die frei von Antimon und/oder Antimon-haltigen Verbindungen sind, als Lasermarkierungsadditiv in einem Dichtungs-, Verschluss-, oder Beschichtungsmaterial oder Lack aus Kunststoff, wobei die mittels Lasergranulometrie bestimmte Korngrößenverteilung der sphärischen Metallpartikel, in der Form der Volumen-gemittelten Summendurchgangskorngrößenverteilung, einen D₉₉-Wert von < 110 µm, einen D₉₀-Wert von < 75 µm und einen D₅₀-Wert von < 45 µm, aufweisen.

Die Lasergranulometrie ist ein Laserbeugungsverfahren, bei dem die Größe der Partikel aus der Beugung des Laserlichts ermittelt wird. Vorzugsweise wird das Laserbeugungsverfahren mit dem Gerät Helos der Fa. Sympatec, Clausthal-Zellerfeld, Deutschland, gemäß Herstellerangaben durchgeführt.

In einer bevorzugten Ausführungsform der vorliegenden Erfindung ist der Kunststoff des Dichtungs- oder Verschlussmaterials ein thermoplastisches Polymer, ein Elastomer, ein thermoplastisches Elastomer (TPE), oder ein thermoplastisches Vulkanisat (TPV).

In einer weiteren bevorzugten Ausführungsform ist der Kunststoff des Dichtungs- oder Verschlussmaterials aus Polyethylen, einem Copolymer aus Ethylen mit anderen Niederalkenen, Polypropylen, thermoplastischen Elastomeren, Ethylen-Propylen-Copolymeren, Säure-modifizierten Ethylen-Propylen-Copolymeren, Styrol/Butadien-Elstomer, carboxyliertem Styrol/Butadien, Polyisopren, Styrol/Isopren/Styrol-Blockcopolymeren, Styrol/Butadien/Styrol-Blockcopolymeren, Styrol/Ethylen/Butylen/Styrol-Blockcopolymeren, Polystyrol/Polyethylene/propylen-Blockcopolymeren, Polystyrol/Polyethylen/propylen/Polystyrol-Blockcopolymeren, Polystyrol/Polyethylen/propylen/Styrol-Blockcopolymeren, Polystyrol, Ethylen/Vinylacetat-Copolymeren und -Terpolmeren, Ethylenacrylat-Copolymeren und -Terpolymeren, Ethylen/Vinylalkohol-Copolymeren, Butylelastomeren, Ethylen-Copolymeren aus Ethylen und einem säurehaltigen Olefin, Polyvinylchloridpolymeren oder Gemischen davon ausgewählt.

In einer anderen bevorzugten Ausführungsform der vorliegenden Erfindung ist der Kunststoff des Beschichtungsmaterials aus Acrylpolymeren, Styrolpolymeren und hydrierten Produkten davon, Vinylpolymeren, Polyolefinen und hydrierten oder epoxidierten Produkten davon, Aldehydpolymeren, Epoxidpolymeren, Polyamiden, Polyestern, Polyurethanen, Polymeren auf Sulfonbasis, natürlichen Polymeren und Derivaten davon oder aus Gemischen davon ausgewählt.

In einer weiteren bevorzugten Ausführungsform ist der Kunststoff des Lacks (Bindemittel) aus einem Alkydharz, Chlorkautschuk, Epoxidharz, Acrylatharz, Polyester, Polyurethan, oder einer Kombination auf Cellulosenitrat- und Alkydharzbasis ausgewählt.

Weitere bevorzugte Ausführungsformen der vorliegenden Erfindung sind in den abhängigen Ansprüchen angegeben.

Die der Erfindung zugrunde liegende Aufgabe wird ferner durch Bereitstellung eines Dichtungs- oder Verschlussmaterials aus Kunststoff gelöst, welches als ein Lasermarkierungsadditiv die vorstehend definierten sphärischen Metallpartikel enthält.

In einer bevorzugten Ausführungsform ist das lasermarkierbare Dichtungsmaterial ein Dichtungsmaterial für einen Kronkorken, eine Kappe, einen Drehverschluss, einen Glasstopfen, einen Sprühkopf, einen Ausgießer, eine Staubschutzkappe, einen Verschluss für Aerosolkappen, einen Ventilverschluss oder einen Sportgetränkeverschluss. Das lasermarkierbare Verschlussmaterial ist vorzugsweise ein Kunststoff-Korken, eine Kappe, ein Drehverschluss, eine Staubschutzkappe, ein Verschluss für Aerosolkappen, ein Ventilverschluss oder ein Sportgetränkeverschluss.

Die der Erfindung zugrunde liegende Aufgabe wird ferner durch Bereitstellung eines lasermarkierbaren Beschichtungsmaterials oder lasermarkierbaren Lacks aus Kunststoff gelöst, welche als ein Lasermarkierungsadditiv die vorstehend definierten sphärischen Metallpartikel enthalten.

In einer bevorzugten Ausführungsform ist der Lack ein Pulverlack, ein physikalisch trocknender Lack, ein strahlenhärtbarer Lack oder ein ein- oder mehrkomponentiger Reaktivlack.

Die vorliegende Erfindung betrifft ferner einen markierten Gegenstand, erhältlich durch Markieren eines vorstehend definierten Dichtungs- oder Verschlussmaterials oder eines vorstehend definierten Beschichtungsmaterials oder Lacks durch Bestrahlen mit einem Laser.

Metallpulver sind seit langem bekannt. Sie werden u.a. als Ausgangsmaterial zur Herstellung von Metallplättchen verwendet. So wird Zinkpulver beispielsweise als Korrosionspigment eingesetzt.

Es hat sich völlig überraschend herausgestellt, dass sich Metallpulver, die in dieser Anmeldung als sphärische Metallpartikel bezeichnet werden, ausgezeichnet als Lasermarkierungsadditiv eignen.

Völlig überraschend ist dabei, dass sphärische Metallpartikel eine kontrastreiche Kennzeichnung ermöglichen, ohne dass dabei notwendigerweise transparente Kunststoffmaterialien, wie Dichtungs-, Verschluss- oder Beschichtungsmaterialen oder Lacke, eingetrübt oder eingefärbt werden müssen. Der Grund hierfür dürfte vermutlich darin liegen, dass aufgrund der sphärischen Form der Metallpartikel einfallendes Licht im Unterschied zu den flächigen Perlglanzpigmenten oder flächigen Metalleffektpigmenten nicht gerichtet reflektiert wird und insofern von einem Betrachter nicht als stark reflektierendes Pigment wahrgenommen wird. Andererseits vermögen sphärische Metallpartikel das eingestrahlte Laserlicht in hohem Maße zu absorbieren und demzufolge in Wärme umzuwandeln.

Unter sphärischen Metallpartikeln wird im Sinne der Erfindung nicht notwendigerweise eine absolut konzentrische dreidimensionale Struktur verstanden.

Unter sphärischen Metallpartikeln wird im Sinne der Erfindung verstanden, dass diese keine plättchenartige Form aufweisen, wie dies bei Effektpigmenten, bspw. Perlglanzpigmenten oder Metalleffektpigmenten, der Fall ist. Unter dem Begriff sphärische Form wird im Sinne der Erfindung beispielsweise auch eine Form verstanden, die nur eine angenähert kugelförmige Form aufweist oder spratzig ist. Eine spratzige Form ist insbesondere **dadurch gekennzeichnet, dass** auf einem nichtflächigen Körper an der Oberfläche bspw. dendritische Fortsätze vorhanden sein können. Zudem kann die Oberfläche auch irregulär geformt sein kann. Derartige sphärische Metallpartikel können bspw. durch Verdüsung oder Zerstäubung von geschmolzenem Metall erhalten werden. Sie werden kommerziell in großen Mengen hergestellt und sind preisgünstig erhältlich, beispielsweise von der Fa. Ecka Granules (D-91235 Velden, Deutschland).

Prinzipiell können zur Lasermarkierung sphärische Metallpartikel mit einem weiten Korngrößenbereich verwendet werden. Bevorzugt werden jedoch kleinere Metallpartikel verwendet. Es hat sich überraschenderweise herausgestellt, dass insbesondere die Punktgenauigkeit der Lasermarkierung bei Verwendung kleinerer Metallpartikel besser wird. Die Punktgenauigkeit verschlechtert sich, wenn auch nur kleine Mengen zu großer Metallpartikel vorhanden sind.

Sphärische Metallpartikel besitzen eine Korngrößenverteilung, die gewöhnlicherweise ungefähr die Form einer log-Normalverteilung aufweist. Die Größenverteilung wird üblicherweise mittels Lasergranulometrie bestimmt.

Bei dieser Methode werden in die Metallpartikel in Form einer Dispersion in einem organischen Lösemittel vermessen. Die Streuung des eingestrahlten Laserlichtes wird in verschiedene Raumrichtungen erfasst und gemäß der Frauenhofer Beugungstheorie mittels einer Software ausgewertet. Dabei werden die Partikel rechnerisch als Kugeln behandelt. Somit beziehen sich die ermittelten Durchmesser stets auf den über alle Raumrichtungen gemittelte Äquivalentkugeldurchmesser, unabhängig von der tatsächlichen Form der Metallpartikel. Es wird die Größenverteilung ermittelt, die in Form eines Volumenmittels (bezogen auf den Äquivalentkugeldurchmesser) berechnet wird. Diese volumengemittelte Größenverteilung kann u.a. als Summendurchgangskurve dargestellt werden. Die Summendurchgangskurve wiederum wird meist vereinfachend durch bestimmte Kennwerte charakterisiert, z. B. den D₅₀- oder D₉₀.-Wert. Unter einem D₉₀-Wert wird verstanden, dass
90 % aller Partikel unter dem angegebenen Wert liegen. Anders ausgedrückt, liegen
10 % aller Partikel oberhalb des angegebenen Wertes. Bei einem D₅₀-Wert liegen 50 % aller Partikel unter und 50 % aller Partikel oberhalb des angegebenen Wertes.

Die erfindungsgemäßen sphärischen Metallpartikel weisen eine Korngrößenverteilung mit einem D₉₉-Wert < 110 µm, einem D₉₀-Wert von < 75 µm und einem D₅₀-Wert < 45 µm auf. Besonders bevorzugt weisen die erfindungsgemäßen sphärischen Metallpartikel einen D₅₀-Wert im Bereich von 0,5 bis < 45 µm auf.

Bei zu groben sphärischen Metallpartikel mit einer Korngrößenverteilung mit D₉₉-Wert > 110 µm und einem D₉₀-Wert von > 75 µm sind der gewünschte Kontrast und insbesondere die hohe Punktgenauigkeit der Lasermarkierung nicht zufrieden stellend. Gleiches gilt, wenn beispielsweise die Korngrößenverteilung der sphärischen Metallpartikel einen D₉₉-Wert < 110 µm und einem D₉₀-Wert von < 75 µm aufweisen, jedoch der D₅₀-Wert > 45 µm ist. Derartige Metallpartikel besitzen einen geringeren Feinanteil und weisen nicht die in dieser Erfindung beschriebenen Vorteile auf.

Vorzugsweise ist der D₉₉-Wert < 70 µm und der D₉₀-Wert von < 40 µm. Hiermit sind vorzugsweise Korngrößenverteilungen mit einem D₅₀-Wert von < 25 µm verbunden. Bei Verwendung dieser feineren Metallpartikeln ist die Punktgenauigkeit der Lasermarkierung weiter verbessert.

Unter Punktgenauigkeit versteht man eine gute Auflösung der Lasermarkierung ohne störende vereinzelte, besonders große Punkte. Derart störende Punkte treten insbesondere bei Verwendung von groben Metallpartikeln auf.

Die sphärischen Metallpartikel werden dem Kunststoff zugesetzt und bspw. durch Extrusion verarbeitet. Hierbei kann es passieren, das vereinzelte Partikel durch die im Extruder auftretenden Scherkräfte zu Plättchen (Flakes oder Flitter) verformt werden. Dies macht sich im Kunststoff durch helle, metallisch glänzende Punkte bzw. Flitter bemerkbar. Wenn dieser Effekt nicht auftreten soll, so sind in einer weiter bevorzugten Ausführungsform sphärische Metallpartikel mit einer Korngrößenverteilung mit einem D₉₉-Wert < 65 µm und einem D₉₀-Wert von < 36 µm zu verwenden. Hierbei ist vorzugsweise der D₅₀-Wert der Korngrößenverteilung < 20 µm. Besonders bevorzugt weisen die erfindungsgemäßen sphärischen Metallpartikel einen D₅₀-Wert im Bereich von 0,55 bis < 20 µm auf.

Besonders bevorzugt werden sphärische Metallpartikel mit einer Korngrößenverteilung mit einem D₉₉-Wert < 55 µm und einem D₉₀-Wert von < 30 µm verwendet. Bei diesen sphärischen Metallpartikel ist vorzugsweise der D₅₀-Wert der Korngrößenverteilung <18 µm. Besonders bevorzugt weisen die erfindungsgemäßen sphärischen Metallpartikel einen D₅₀-Wert im Bereich von 0,6 bis < 18 µm auf. Mit steigender Feinheit, d.h. mit abnehmender Korngröße der sphärischen Metallpartikel, kann die Abbildungsschärfe und die Punktgenauigkeit der durch Lasermarkierung aufgebrachten Kennzeichnung oder Abbildung nochmals weiter gesteigert werden.
Besonders feine Typen bewirken eine ausgeprägt hohe Abbildungsschärfe, Punktgenauigkeit und Kontrast bei der Lasermarkierung.

Es wird vermutet, dass durch die Verwendung feiner Metallpartikel aufgrund deren hoher spezifischen Oberfläche die Laserlichtabsorption und nachfolgend die Energieabgabe in die Umgebung des Metallpartikels in besonders definierter, örtlich eng begrenzter Weise erfolgt. Daher weisen die Lasermarkierungen entsprechend pigmentierter Kunststoffe die genannten Vorteile auf.

In einer ganz besonders bevorzugten Ausführungsform werden erfindungsgemäße Metallpartikel mit einer Korngrößenverteilung mit einem D₉₉-Wert < 40 µm und einem D₉₀-Wert von < 20 µm verwendet. Bei diesen sphärischen Metallpartikeln ist vorzugsweise der D₅₀-Wert der Korngrößenverteilung < 11 µm. Besonders bevorzugt weisen die erfindungsgemäßen sphärischen Metallpartikel einen D₅₀-Wert im Bereich von 0,65 bis < 11 µm auf.

Bei diesen sehr feinen Metallpartikeln wurde überraschenderweise gefunden, dass Lasermarkierungen mit hohem Kontrast und Punktgenauigkeit bei sehr hohen Schreibgeschwindigkeiten des Lasers erhalten werden können. Die Schreibgeschwindigkeiten des Lasers reichen von 120 bis ca. 10.000 mm/min, bevorzugt von 150 bis 8.000 mm/min, besonders bevorzugt von 200 bis 2.000 mm/min und ganz besonders bevorzugt von 230 bis 1.000 mm/. Hierbei ist die im einzelnen erreichbare Schreibgeschwindigkeit abhängig von vielen Parametern, insbesondere jedoch von der Laserleistung und der Impulsfrequenz. Dies bringt im Hinblick auf die Durchsatzraten bei der Lasermarkierung von Objekten erhebliche Zeitvorteile mit sich.

Gemäß einer weiteren bevorzugten Ausführungsform der Erfindung weisen die erfindungsgemäßen Metallpartikel einen Metalloxidgehalt von nicht mehr als 15 Gew.-%, bezogen auf das Gesamtgewicht der Metallpartikel auf. Weiterhin ist bevorzugt, dass der Metalloxidgehalt der Metallpartikel nicht mehr als 10 Gew.-%, und weiter bevorzugt nicht mehr als 5 Gew.-% beträgt. Als sehr geeignet hat sich ein Metalloxidgehalt von etwa 0,3 bis 6 und besonders bevorzugt von 0,4 bis 1,5 Gew.-% erwiesen.

Die geringen Metalloxidgehalte wirken sich vorteilhaft auf die schnelle Energieaufnahme des eingestrahlten Laserstrahlung durch die Metallpartikel auf. Die Untergrenze von 0,3 Gew.-% Metalloxidgehalt ist durch die sich natürlich ausbildende Oxidschichten der Metalle bedingt.

Bei dem Metalloxidgehalt der Metallpartikel kann es sich zum einen um eine oberflächlich gebildete Metalloxidschicht handeln. Beispielsweise weisen Aluminiumpartikel an der Oberfläche eine dünne Aluminiumoxidschicht auf.

Die Metallpartikel bestehen mithin vorzugsweise zu etwa 80 Gew.-%, weiter bevorzugt zu etwa 85 Gew.-%, weiterhin bevorzugt zu etwa 90 Gew.-%, noch weitere bevorzugt zu etwa 95 Gew.-% aus Metall. Vorzugsweise bestehen die Metallpartikel zu 98,5 bis 99,6 Gew.-% aus Metall.

Vorzugsweise enthalten die Metallpartikel Metalle oder bestehen aus Metallen, die aus der Gruppe, die aus Aluminium, Kupfer, Silber, Gold, Zink, Zinn, Eisen, Titan, Vanadium, Magnesium und Legierungen davon besteht, ausgewählt wird. Eine Legierung muss nicht notwendigerweise ausschließlich aus den vorgenannten Metallen bestehen. Es können auch weitere Metalle in Legierung mit den vorgenannten Metallen oder Legierungen davon vorliegen, beispielsweise auch in Form von Verunreinigungen. Als sehr geeignete Metalle haben sich Aluminium, Silber, Kupfer und Eisen erwiesen. Diese Metalle haben auch in kleinsten Konzentrationen besonders gute Lasermarkierbarkeiten ergeben. Eine geeignete Legierung ist beispielsweise Messing.

Aufgrund der mikroskaligen Korngrößenverteilung der Metallpartikel weist das erfindungsgemäße Lasermarkierungsadditiv eine äußerst hohe Punktgenauigkeit auf.

Nach Einstrahlung eines Laserstrahls in einen Kunststoff, der das erfindungsgemäße Lasermarkierungsmittel enthält, kommt es nach Einstrahlung eines Laserstrahls zu einer selektiven Erhitzung der mikroskaligen Metallpartikel, Übertragung der Wärme auf den umgebenen Kunststoff und infolge des hiermit verbundenen thermisch induzierten Polymerabbaus zu einer Carbonisierung und/oder zu einem Aufschäumen der die Metallpartikel umgebenden Polymere in der Kunststoffmatrix. In Abhängigkeit von der Art des verwendeten Polymers und/oder in Abhängigkeit von dem Energieeintrag durch den Laserstrahl kommt es zu einer Carbonisierung und/oder zu einem Aufschäumen.

Eine Carbonsierung führt zu einer Schwarzeinfärbung; ein Aufschäumen führt zu einer Aufhellung, die bis zu einer Art Weißeinfärbung reichen kann. In den meisten Fällen ist ein deutlicher Kontrast zum nichtmarkierten Kunststoff erwünscht.

In weiteren Ausführungsformen jedoch kann die durch den thermisch induzierten Polymerabbau hervorgerufene Änderung im Kunststoff so gering sein, dass sie nicht oder nur unwesentlich mit dem menschlichen Auge, d.h. nicht mit bloßem Auge wahrgenommen werden können. Der hier verwendete Ausdruck "nicht mit bloßem Auge wahrnehmbar" bedeutet im Sinne der vorliegenden Erfindung, dass die (unvergrößerte) Markierung mit dem bloßen Auge nicht sichtbar ist, jedoch durch spezielle Lesegräte, wie etwa einer Lupe oder einem Mikroskop oder Ähnlichem, detektiert werden. Hierbei sind beispielsweise Schriftgrößen im Bereich von 0,7 mm möglich. Daher können derartige im wesentlichen unsichtbare Lasermarkierungen z.B. für Sicherheitsmarkierungen oder bei der diskreten Kennzeichnung von Markenprodukten etc. Verwendung finden, z.B um Fälschungen besser aufdecken zu können. Es ist ferner möglich, Produkte mit z.B Chargennummern zu kennzeichnen, auch wenn eine sichtbare Markierung aus ästhetischen Gründen unerwünscht ist.

Weitere Ausführungsformen sehen eine gezielte Verfärbung des Kunststoffes durch Beimischung eines mit dem eingestrahlten Laserlicht gezielt abbaubaren Farbmittels vor. So kann dieses Farbmittel sich unter Einwirkung des Laserlichtes zersetzen und der Kunststoff zusätzlich zur Schwarzfärbung oder Aufhellung farbloser oder, wenn dem Kunststoff weitere nicht durch das Laserlicht abbaubare Farbmittel zugesetzt sind, deren Eigenfarbe annehmen.

Da die Carbonisierung und/oder das Aufschäumen nur lokal um die mikroskaligen Metallpartikel herum erfolgt, kann eine Markierung mit hoher Punktgenauigkeit erfolgen. Eine hohe Abbildungsschärfe macht sich unter anderem dadurch bemerkbar, dass ein Strich nicht als Ansammlung von einzelnen Punkten wahrgenommen wird, sondern als durchgehender gerader Strich, der aus einer Vielzahl kleiner, für das menschliche Auge nicht auflösbarer Punkte zusammengesetzt ist.

Es hat sich mithin als äußerst überraschend herausgestellt, dass - obwohl die Wechselwirkung der sphärischen Metallpartikel mit sichtbarem Licht nicht stark genug ist, um zu einer Vergrauung (Trübung) eines Kunststoffmateriales zu führen - die Wechselwirkung mit eingestrahltem Laserlicht jedoch ausreichend ist, um die gewünschte Carbonisierung und/oder das gewünschte Aufschäumen der die Metallpartikel umgebenden Polymermatrix zu erzeugen und mithin den Kunststoffgegenstand, mit einer kontrastreichen Kennzeichnung oder Markierung zu versehen.
Die mikroskaligen sphärischen Metallpartikel sind aufgrund ihrer sehr hohen Absorptionseigenschaften für elektromagnetische Strahlung vom UV- bis hin zum IR-Bereich sowie ihrer ausgezeichneten Wärmeleitfähigkeit besonders gut als Lasermarkierungs- und/oder laserschweißbarkeitsmittel geeignet. Sie übertreffen herkömmliche metalloxidische Partikel in ihrer diesbezüglichen Wirksamkeit.

Die sphärischen Metallpartikel können in Form eines Pulvers einem Kunststoff zugegeben werden. Vorteilhafter ist jedoch die Zugabe der sphärischen Metallpartikel in Form eines Konzentrates oder Masterbatches. Es hat sich gezeigt, dass Konzentrate oder Masterbatche die Einarbeitbarkeit der sphärischen Metallpartikel in Kunststoffe erheblich erleichtert.

Ein derartiger Masterbatch umfasst sphärische Metallpartikel wie vorstehend beschrieben und mindestens einen Dispersionsträger.

Im Masterbatch beträgt der Gehalt an sphärischen Metallpartikeln 0,001 bis 99,9 Gew.-%, bezogen auf das Gesamtgewicht des Masterbatches. Bevorzugt beträgt der Gehalt an sphärischen Metallpartikeln 0,5 bis 95,0 Gew.-%, besonders bevorzugt 1,0 bis 95 Gew.-% und weiter besonders bevorzugt bei 5 bis 80 Gew.-%, jeweils bezogen auf das Gesamtgewicht des Masterbatches.

Der Dispersionsträger kann mindestens eine Kunststoffkomponente, Wachse, Harze, Additive, Lösemittel und/oder Weichmacher umfassen.

Im Fall eines bei Raumtemperatur (18-25 °C) festen Masterbatches umfasst der Dispersionsträger bevorzugt Kunststoffkomponenten, Wachse, Harze und/oder Additive.

Als Kunststoffkomponente wird dabei vorzugsweise ein Polymer verwendet, das mit dem Kunststoffmaterial, in das es eingearbeitet werden soll, verträglich, d.h. mischbar ist. Gemäß einer bevorzugten Variante ist die in dem erfindungsgemäßen Masterbatch verwendete Kunststoffkomponente identisch mit dem Kunststoffmaterial, in das Lasermarkierungsmittel eingearbeitet werden soll.

Als Wachse sind bevorzugt Polyolefin-Abbauwachse oder Polyalkylenwachse, beispielsweise Polypropylenwachse. Als Polypropylenwachs hat sich Licocene^{®}, Fa. Clariant, Schweiz, als sehr geeignet erwiesen.

Bevorzugte Harze, die im erfindungsgemäßen Masterbatch verwendet werden können, sind Phenolharze, oder Ketonharze wie z.B. Laropal A81 der Fa. BASF.

Als Additive können dem Lasermarkierungsmittel Stabilisatoren, Tenside, Entschäumer, Dispergiermittel, Korrosionsinhibitoren, beispielsweise organische Phosphorsäuren oder Phosphonsäuren, und/oder oberflächenaktive Substanzen, etc. zugesetzt werden.

Die Additive können beispielsweise zu einer Verbesserung der Einarbeitbarkeit Masterbatches in den Kunststoff führen. Durch die Additive wird eine Agglomeration oder Sedimentation der Metallpartikel im Masterbatch verhindert. Die Additive können mit dem sphärischen Metallpartikeln einfach zusammen gemischt werden bzw. die sphärischen Metallpartikeln mit den Additiven beschichtet werden.

Gemäß einer weiteren bevorzugten Ausführungsform enthält der Masterbatch einen Gehalt an Additive der vorzugsweise in einem Bereich von 0,001 bis 20 Gew.-%, bezogen auf das Gesamtgewicht des Masterbatches, beträgt. Gemäß einer weiteren bevorzugten Ausführungsform beträgt der Gehalt an Additiven 0,01 bis 10 Gew.-%, weiter bevorzugt 0,1 bis 4 Gew.-%, jeweils bezogen auf das Gesamtgewicht des Masterbatches.

Im Fall eines bei Raumtemperatur (18-25 °C) flüssigen Masterbatches umfasst der Dispersionsträger bevorzugt Lösemittel und/oder Weichmacher. Als Lösemittel wird besonders bevorzugt Weißöl verwendet. Als Weichmacher werden üblicherweise Phthalate, Adipate, Trimellitate, Sebazate, Weinsäurederivate, Zitronensäureester, Polyester, Phosphate oder Fettsäureester verwendet. Bevorzugte Beispiele hierfür sind Bis-2-ethylhexyl-phthalat, Bis-2-ethylhexyl-adipat, Tri-2-ethylhexyl-trimellitat oder epoxidiertes Sojabohnenöl.

Der Masterbatch kann weitere Komponenten wie beispielsweise Farbpigmente und/oder Farbstoffe enthalten.

Hinsichtlich der Konzentration an sphärischen Metallpartikeln im Masterbatch sind zwei bevorzugte unterschiedliche Bereiche zu unterscheiden:
In einem Fall beträgt der Gehalt an sphärischen Metallpartikeln im Masterbatch bevorzugt 80 bis 99 Gew.-% und besonders bevorzugt 85 bis 95 Gew.-%, jeweils bezogen auf das Gesamtgewicht des Masterbatches. In diesem Fall werden dem Masterbatch bevorzugt polymerverträgliche Lösemittel wie Weißöl und/oder Kunststoffkomponenten sowie Dispergiermittel zugegeben.

Der Gehalt der Kunststoffkomponente im Masterbatch liegt in diesem Fall vorzugsweise in einem Bereich von 0,5 bis 20 Gew.-%, bevorzugt 1 bis 15 Gew.-% und besonders bevorzugt von 2 bis 10 Gew.-%, jeweils bezogen auf das Gesamtgewicht des Masterbatches.

Im anderen Fall ähnelt der Masterbatch in seiner Zusammensetzung bereits sehr stark dem lasermarkierbaren Kunststoffmaterial, nur liegen die Komponenten in konzentrierterer Form vor.

Der Gehalt an sphärischen Metallpartikeln im Masterbatch liegt hier bevorzugt bei 0,001 bis 5 Gew.-% und besonders bevorzugt 0,5 bis 2 Gew.-%, jeweils bezogen auf das Gesamtgewicht des Masterbatches.

Das Masterbatch enthält hier überwiegend Kunststoffkomponenten.
Der Gehalt der Kunststoffkomponente im Masterbatch liegt in diesem Fall vorzugsweise in einem Bereich von 50 bis 99 Gew.-%, bevorzugt 60 bis 98 Gew.-% und besonders bevorzugt von 70 bis 95 Gew.-%, jeweils bezogen auf das Gesamtgewicht des Masterbatches. In diesem Fall wird das Masterbatch bevorzugt dem Kunststoff entweder vor dem Extrudieren beigemischt, oder während des Extrudierprozesses zudosiert. Weiterhin enthält ein derartiger Masterbatch i.d.R. Additive und optional Wachse, Farbpigmente und/oder Farbstoffe.

Es sind auch niedrigere Konzentrationen, wie etwa ein 40 %iger Masterbatch oder noch niedrigere Konzentrationen möglich, um beispielsweise bei geringen Konzentrationen der Metallpartikel eine gleichmäßige Verteilung zu gewährleisten.

Die Herstellung des Masterbatches erfolgt z.B. in einem geeigneten Mischer, beispielsweise einem Taumelmischer. Hierbei werden die sphärischen Metallpulver sowie ggfs. weitere Komponenten mit einem Kunststoffgranulat oder Kunststoffpulver bzw. Kunststoffausgangsmaterial in jeglicher Darreichungsform vermengt und nachfolgend beispielsweise extrudiert. Auch kann das Masterbatch hergestellt werden, indem die sphärischen Metallpulver sowie ggfs.weitere Komponenten direkt der Kunststoffschmelze beim Extrudierprozess zudosiert werden.

Da das erfindungsgemäße Lasermarkierungsmittel im wesentlichen aus sphärischen Metallpartikeln besteht, kann die Vermischung auch unter intensiven Bedingungen erfolgen. Eine Verformung der Metallpartikel zu Plättchen, wie sie im Fall einer Verwendung von Metalleffektpigmenten vorliegen, ist lediglich bei gröberen Partikeln zu beobachten. Die erhaltene Mischung kann dann direkt, beispielsweise in einem Extruder oder einer Spritzgießmaschine, weiter verarbeitet werden. Nach Erhalt des gewünschten Kunststoff-Formkörpers kann die Kennzeichnung mittels Laserstrahl durchgeführt werden.

Aufgrund der mikroskaligen Größe der Metallpartikel ist es sowohl aus Handhabungsgründen als auch aus Gesundheits- und Sicherheitsgründen bevorzugt, dass das erfindungsgemäße Lasermarkierungsmittel oder ein Masterbatch davon in staubarmer, vorzugsweise nicht-staubender Präparation vorliegt.

Insofern liegt bei einer weiter bevorzugten Form das Masterbatch, enthaltend mindestens das Lasermarkierungsmittel und die Kunststoffkomponente, in einer kompaktierten Form vor. Diese kompaktierte Form umfaßt Granulate, Tabletten, Briketts, Würstchen oder Pellets. Der Lösemittelgehalt derartiger kompaktierter Formen liegt bei 0,0 bis 15 Gew-% und bevorzugt bei 0,001 bis 5 Gew.-% und ebenfalls bevorzugt bei 0,0 bis < 0,1 Gew-% (in Lebensmittelkontaktmaterialien), jeweils bezogen auf das Gesamtgewicht der kompaktierten Form. Die Größe der kompaktierten Formen liegt dabei in einem Bereich von 50 µm bis 80 mm, vorzugsweise 200 µm bis 50 mm, weiter bevorzugten von 500 µm bis 25 mm. Eine sehr geeignete Größe der kompaktierten Formen des erfindungsgemäßen Lasermarkierungsmittels oder des Masterbatches liegt in einem Bereich von 750 µm bis 10 mm.

Die Kompaktierung kann dabei durch Vermengen von sphärischen Metallpartikeln und Kunststoffkomponenten und optional einem weiteren Bindemittel und nachfolgendes Granulieren, Pelletieren, Tablettieren, Extrudieren, Komprimieren, etc. erfolgen. Hierbei wird durch entsprechende Temperaturen die Kunststoffkomponente aufgeschmolzen und vereinigt sich somit mit den sphärischen Metallpigmenten unter Beibehaltung der aufgezwungenen Form.

In einer weiteren Ausführungsform wird das Bindemittel in einem geeigneten Lösemittel gelöst und mit dem Lasermarkierungsmittel und ggfs. anderen Additiven gemischt. Anschließend wird in einer Ausführungsform unter Rühren das Lösemittel durch Vakuum und/oder erhöhter Temperatur wieder entfernt. Dadurch entstehen dreidimensionale unregelmäßige geformte Granulate. In einer weiteren Ausführungsform wird die Paste pelletiert oder tablettiet und anschließend getrocknet.

Die vorgenannten Darreichungsformen ermöglichen eine sichere Handhabung und Einarbeitung in einen Kunststoff, ohne Gefahr einer Staubexplosion oder gesundheitlicher Beeinträchtigung.

Äußerst vorteilhaft bei der vorliegenden Erfindung ist, dass eine etwaige Trübung oder Graufärbung des Kunststoffs durch Zusatz von Farbmitteln ohne weiteres überdeckt werden kann. Im Stand der Technik sind die zuweilen auftretenden braunen oder grünlichen Einfärbungen kaum zu überdecken, da sie - im Unterschied zu einer leichten Trübung oder Vergrauung - eine Einfärbung darstellen.

Gemäß einer weiteren bevorzugten Ausführungsform der Erfindung sind die Metallpartikel mit wenigstens einer anorganischen Metalloxidschicht versehen.

Die wenigstens eine anorganische Metalloxidschicht kann separat auf die Metallpartikel aufgebracht sein. Bspw. kann als Metalloxidschicht eine SiO₂ - Schicht, Al₂O₃ -Schicht oder TiO₂ -Schicht aufgebracht sein. Es können auch Kombinationen von Metalloxidschichten, beispielsweise von zunächst SiO₂ und darauffolgend TiO₂ oder von zunächst TiO₂ und darauffolgend SiO₂ aufgebracht sein.

Vorzugsweise wird als Metalloxidschicht eine SiO₂-Schicht aufgebracht. Die SiO₂-Schicht wird bevorzugt unter Verwendung von Sol-Gel-Verfahren aufgebracht.

Als Ausgangsverbindungen für die SiO₂ -Schicht werden bevorzugt Tetraalkoxysilane verwendet. Beispiele hierfür sind: Tetramethoxysilan, Tetraethoxysilan, Tetrapropoxysilan, Tetraisopropoxysilan oder Tetrabutoxysilan oder Mischungen hieraus.

Das Tetraalkoxysilan wird unter Wasserzugabe in vorzugsweise basischem Milieu zunächst hydrolysiert; nachfolgend wird eine SiO₂ -Schicht auf die Metallpartikel abgeschieden.

Zur Katalyse der SiO₂ -Abscheidung werden vorzugsweise stickstoffhaltige Basen wie Ammoniak, Alkyl- oder Dialkylamine hinzugefügt. Geeignete Verbindungen sind Methylamin, Ethylamin, Dimethylamin, Diethylamin, Pyridin, Piperazin, etc..

Auf die Metallpartikel kann gemäß einer weiteren bevorzugten Ausführungsform auch eine organisch-chemische Oberflächenmodifizierung aufgebracht sein. Zwischen Metallpartikel und organisch-chemischer Oberflächenmodifizierung kann ferner eine Metalloxidschicht, beispielsweise SiO₂-Schicht, angeordnet sein.

Die organisch-chemische Oberflächenmodifizierung kann in einer weiteren Variante eine die Metallpartikel umhüllende organisch-chemische Polymermatrix sein. Diese wird bevorzugt durch gezielte Polymerisation aus Monomeren aus die Metallpartikel aufgebracht.

Die der Erfindung zugrunde liegende Aufgabe wird ferner durch ein lasermarkierbares Dichtungs- oder Verschlussmaterial gelöst. Das erfindungsgemäße Dichtungs- oder Verschlussmaterial ist ein lasermarkierbares Dichtungs- oder Verschlussmaterial, enthaltend ein Lasermarkierungsadditiv wie vorstehend definiert. Das lasermarkierbare Dichtungs- oder Verschlussmaterial kann ferner einen Masterbatch wie vorstehend beschrieben enthalten.

In einer bevorzugten Ausführungsform ist das erfindungsgemäße Dichtungsmaterial ein Dichtungsmaterial für einen Kronkorken, eine Kappe, einen Drehverschluss, einen Glasstopfen, einen Sprühkopf, einen Ausgießer, eine Staubschutzkappe, einen Verschluss für Aerosolkappen, einen Ventilverschluss oder einen Sportgetränkeverschluss. In einer anderen bevorzugten Ausführungsform ist das erfindungsgemäße Verschlussmaterial eine Kappe, ein Kunststoff-Korken, ein Drehverschluss, eine Staubschutzkappe, ein Verschluss für Aerosolkappen, ein Ventilverschluss, oder ein Sportgetränkeverschluss. Ein erfindungsgemäßes Verschlussmaterial kann einteilig oder mehrteilig sein. Ein Dichtungsmaterial der Erfindung wird beispielsweise als Liner in ein Verschlussmittel, wie einen Schraubdeckel, eingebracht. Ein erfindungsgemäßes Verschlussmaterial ist ohne Verwendung einer separaten Dichtung als Verschlussmittel geeignet.

Derartige Materialien sind prinzipiell im Stand der Technik bekannt, und können beispielsweise durch Spritzgießen oder Verstempeln hergestellt werden. Beispielhafte Verfahren zur Herstellung von Dichtungs- und Verschlussmaterialien durch Verstempeln sind beispielsweise in der WO 02/057063, WO 01/47679, WO 01/32390 und EP 0 838 326 beschrieben. Beispielhafte Verfahren zur Herstellung von Dichtungs- und Verschlussmaterialien durch Verstempeln sind beispielsweise in der WO 02/12087, US 4 564 113, US 4 774 134 und EP 0 155 976 beschrieben. Geeignete Dichtungsmaterialien sind beispielsweise in der EP 0 770 559, WO 02/14171, WO 2004/087509, WO 02/094670 und WO 87/02305 beschrieben. Geeignete Verschlussmaterialien sind beispielsweise in der WO 03/066467, WO 99/05039, EP 0 257 623, WO 2006/013443, WO 2004/014724 und US 5 356 019 beschrieben.

Als Füllgüter für Behältnisse, in denen das erfindungsgemäße Dichtungs- oder Verschlussmaterial verwendet wird, kommen neben den üblichen, wie Getränke, Lebensmittel usw., auch Kosmetik, Körperpflege- und Reinigungsmittel usw. in Frage. Neben den üblichen Packmittel für derartige Getränke, Lebensmittel, Kosmetik, Körperpflege- und Reinigungsmittel sind auch Dosen, Fasseimer, Fässer, sowie Verbundwerkstoffe mit oder ohne Metall, Papier, Pappe, Kunststoffen oder Polymeren, wie Polyolefine, Copolymere bzw. Polymere aus mehreren verschiedenen Polymeren, TPE, TPV oder Kautschuk, geeignet.

Beispielhafte Anwendungsbeispiele des Lacks oder Beschichtungsmaterials sind ein Heißsiegellack, Schutzlack oder Druckvorlack für Deckelfolien von Lebensmittel und Kunststoffverpackungen oder für Pharma-Blisterfolien, ein sterilisationsbeständiger Heißsiegel-, Schutz- oder Druckvorlack für Al-Leichtbehälter und Deckelfolien, ein Innen- oder Außenschutzlack für Menüschalen, ein sterilisationsbeständiger Schutzlack für Pharma-Verschlüsse, ein Haftlack oder abriebfester Außenlack für Aluminium-Drehverschlüsse, ein Außenschutz- und PU-Haftlack für Isolatorplatten, oder ein Hydrophilik- oder Außenschutzlack für Wärmetauscherlamellen, ein Haftlack oder abriebfester Außenlack für Kronkorken und Verschlüsse, ein Innenschutz- und Außenlack für Konservendosen, ein Innen- oder Außenschutzlack, sterilisationsfester Heißsiegellack oder Dichtungsmasse für Standard-, EOE- und peelbare Konservendosendeckel, ein Lack oder Dichtungsmasse für Aerosoldosen, ein hochflexibler und abriebfester Schutzlack für Schmuck- oder Zigarrendosen, oder ein Innenschutz- oder Außenschutzlack für technische Verpackungen.

Ein Lack im Sinne der vorliegenden Erfindung ist nicht besonders eingeschränkt. Vielmehr werden unter dem Begriff alle dem Fachmann bekannten Lacke verstanden, wie z.B. Autolacke, Industrielacke, Reparaturlacke oder Pulverlacke. Ein Gruppe geeigneter Lacke umfasst, ist aber nicht beschränkt auf, Pulverlacke, physikalisch trocknende Lacke, strahlenhärtbare Lacke oder ein- oder mehrkomponentige Reaktivlacke, wie z.B. Zweikomponenten-Polyurethanlacke.

Geeignete Kunststoffe für das erfindungsgemäße Dichtungs-, Verschluss- oder Beschichtungsmaterial oder den erfindungsgemäßen Lack sind nicht besonders eingeschränkt und sind prinzipiell im Stand der Technik bekannt. Die vorliegende Erfindung ist allerdings auch ohne weiteres auf Neuentwicklungen anwendbar. Ferner ist die vorliegende Erfindung für biologisch abbaubare Polymere und Werkstoffe geeignet. Die beanspruchten Dichtungs-, Verschluss- oder Beschichtungsmaterialen oder der beanspruchte Lack unterscheiden sich vom Stand der Technik dadurch, dass sie ein Lasermarkierungsadditiv wie vorstehend beschrieben enthalten.

Der Kunststoff des Dichtungs- oder Verschlussmaterials ist nicht besonders eingeschränkt und kann beispielsweise ein thermoplastisches Polymer, ein Elastomer, ein thermoplastisches Elastomer, oder ein thermoplastisches Vulkanisat (TPV) sein.

Thermoplastischen Elastomere (TPE) lassen sich wie Thermoplaste verarbeiten, haben jedoch kautschukelastische Eigenschaften. Es sind TPE-Blockpolymere, TPE-Pfropfpolymere und segmentierte TPE-Copolymere aus zwei oder mehr Monomerbausteinen geeignet. Besonders geeignete TPE sind thermoplastische Polyurethanelastomere (TPE-U oder TPU), Styrol-Oligoblock-Copolymere (TPE-S) wie SBS (Styrol-Butadien-Styrol-Blockcopolymer) und SEBS (Styrol-Ethylen-Butylen-Styrol-Blockcopolymer, erhältlich durch Hydrieren von SBS), thermoplastische Polyolefin-Elastomere (TPE-O), thermoplastische Polyester-Elastomere (TPE-E), thermoplastische Polyamid-Elastomere (TPE-A) und insbesondere thermoplastische Vulkanisate (TPE-V). Einzelheiten zu TPE findet der Fachmann in G. Holden et al., Thermoplastic Elastomers, 2. Auflage, Hanser Verlag, München 1996.

Vorzugsweise ist der Kunststoff des Dichtungs- oder Verschlussmaterials aus Polyethylen, einem Copolymer aus Ethylen mit anderen Niederalkenen, Polypropylen, thermoplastischen Elastomeren, Ethylen-Propylen-Copolymeren, Säure-modifizierten Ethylen-Propylen-Copolymeren, Styrol/Butadien-Elstomer, carboxyliertem Styrol/Butadien, Polyisopren, Styrol/Isopren/Styrol-Blockcopolymeren, Styrol/Butadien/Styrol-Blockcopolymeren, Styrol/Ethylen/Butylen/Styrol-Blockcopolymeren, Polystyrol/Polyethylene/propylen-Blockcopolymeren, Polystrol/Polyethylen/propylen/Polystyrol-Blockcopolymeren, Polystyrol/Polyethylen/propylen/Styrol-Blockcopolymeren, Polystyrol, Ethylen/Vinylacetat-Copolymeren und -Terpolmeren, Ethylenacrylat-Copolymeren und -Terpolymeren, Ethylen/Vinylalkohol-Copolymeren, Butylelastomeren, Ethylen-Copolymeren aus Ethylen und einem säurehaltigen Olefin, Polyvinylchloridpolymeren oder Gemischen davon ausgewählt.

Als "Niederalken" in Sinne der vorliegenden Erfindung gilt ein Olefin, vorzugsweise α-Olefin, mit 1 bis 10, vorzugsweise 1 bis 8 Kohlenstoffatomen. Ein"säurehaltiges Olefin" in Sinne der Erfindung enthält eine Säuregruppe oder ein Anhydrid davon, wie z.B. Maleinsäure, Maleinsäureanhydrid, Acrylsäure oder Metacrylsäure.

In einer besonders bevorzugten Ausführungsform ist der Kunststoff des Dichtungs- oder Verschlussmaterials aus PVC, einem thermoplastischen Olefin, oder einem thermoplastischen Vulkanisat ausgewählt. Derartige Kunststoffe für Dichtungs- und Verschlussmaterialien sind im Stand der Technik bekannt und im Handel erhältlich. Ein geeignetes PVC ist beispielsweise unter dem Handelsnamen SVELITH von der Firma DS-Chemie, Bremen, Deutschland erhältlich. Geeignete thermoplastische Olefine sind unter den Handelsnamen SVELON^{®}, OXYLON^{®}, und POLYLINER^{®} ebenfalls von der Firma DS-Chemie, Bremen, Deutschland erhältlich. Eine geeignetes thermoplastische Vulkanisat ist unter dem Handelsnamen NOVISEAL^{®} von der Firma DS-Chemie erhältlich.

In einer weiteren besonders bevorzugten Ausführungsform ist der Kunststoff des Dichtungs- oder Verschlussmaterials aus LDPE, HDPE, PP und Copolymeren davon, Copolymeren von Ethylen (wie EVA, LLDPE, EEA), den Styrol-Copolymeren SIBS, SBS, SEBS, oder TPE bzw. TPV ausgewählt.

Geeignete Beschichtungsmaterialien sind nicht besonders eingeschränkt. Der Kunststoff des Beschichtungsmaterials kann beispielsweise aus Acrylpolymeren, Styrolpolymeren und hydrierten Produkten davon, Vinylpolymeren, Polyolefinen und hydrierten oder epoxidierten Produkten davon, Aldehydpolymeren, Epoxylacken, Polyamiden, Polyestern, Polyurethanen, Polymeren auf Sulfonbasis, natürlichen Polymeren und Derivaten davon oder aus Gemischen davon ausgewählt sein. Besonders geeignet sind Polyester und Epoxylacke.

Üblich sind Beschichtungsmaterialien auf Harzbasis. Dieses Harz kann als Lösung in einem Lösungsmittel vorliegen, und wird mittels im Stand der Technik üblicher Verfahren auf einen zu beschichtenden Gegenstand aufgebracht. Ein Beispiel für ein geeignetes Harz ist ein Harz auf Basis von Polyketon. Durch Verdampfen des Lösungsmittels entsteht eine Beschichtung. Das Harz kann auch ein wärme- oder strahlenhärtbares Harz sein. Geeignete Harze schließen beispielsweise Acrylate, Epoxidharze und Vinylether ein. Strahlenhärtbare Harze können, wie im Stande der Technik bekannt, einen Photoinitiator enthalten. Diese Zusammensetzungen werden auf das zu beschichtende Substrat aufgetragen und durch geeignete Strahlung, z.B. UV-Strahlung, gehärtet. Als wärmehärtbare Harze sind unter anderem ungesättigte Polyester und Epoxidharze verwendbar, die als Präpolymer auf einen zu beschichtenden Träger aufgebracht werden, und durch Erwärmen auf eine geeignete Temperatur gehärtet werden.

Geeignete Beschichtungsverfahren sind im Stand der Technik bekannt und umfassen beispielsweise, sind aber nicht beschränkt auf, Beschichten im flüssigen, breiigen oder pastenförmigen Zustand durch Anstreichen, Streichen, Lackieren, Dispersions- oder Schmelzbeschichten, Extrudieren, Gießen, Tauchen z.B. als Hotmelts, sowie Beschichten im festen, d.h. körnigen oder pulvrigen Zustand durch Pulverbeschichtung, Flammspritzverfahren oder Beschichten durch Sintern.
Der Kunststoff des erfindungsgemäßen lasermarkierbaren Lacks (Bindemittel) ist nicht besonders eingeschränkt. Vielmehr können im Stand der Technik übliche Lacke verwendet werden. Als Bindemittel werden beispielsweise veredelte Naturprodukte, wie z.B. aus Kolophonium und Ölen oder Cellulosenitrat, und vollsynthetisch aufgebaute Harze (Kunstharze) verwendet. Als Kustharze sind beispielsweise Phenolharze, Aminharze (z.B. Benzguanamin-, Harnstoff-, Melaminharze), Alkydharze, Polyvinylacetat, Epoxidharze, Polyurethanharze, mit Kolophonium modifizierte Phenolharze, Chlorkautschuk, Chloriertes Polypropylen, Cyclokautschuk, Ketonharze oder Acrylatharze geeignet. In einer bevorzugten Ausführungsform ist das Bindemittel des Lacks ausgewählt aus einem Alkydharz, Chlorkautschuk, Epoxidharz, Acrylatharz, Polyester, Polyurethan, oder einer Kombination auf Cellulosenitrat und Alkydharzbasis. Der Lack kann neben einem Bindemittel ferner Lösungsmittel, Pigmente, Füllstoffe und übliche Lackhilfsmittel enthalten, wie im Stand der Technik üblich. Je nach Art des Bindemittels kann der Lack ein organisches Lösungsmittel und/oder Wasser enthalten oder davon frei sein.

In die vorgenannten Materialien lässt sich das erfindungsgemäße Lasermarkierungsmittel hervorragend einarbeiten. Aus der dann erhaltenen Kunststoff-Lasermarkierungsmittel-Mischung können dann durch thermisches Umformen die gewünschten Formkörper, wie Dichtungs- und Verschlussmaterialien, etc. hergestellt werden. Herstellung und Aufbringung der erfindungsgemäßen Beschichtungsmaterialien und des erfindungsgemäßen Lacks erfolgt beispielsweise aus der vorstehenden Kunststoff-Lasermarkierungsmittel-Mischung auf im Prinzip im Stand der Technik bekannte Weise.

Das Lasermarkierungs-Additiv, enthaltend sphärische Metallpartikel wie vorstehend beschrieben, werden in ein geeignetes Kunststoffmaterial eingebracht. Die Mengen der eingebrachten Metallpartikel können in Abhängigkeit von Kunststoffen und/oder Verwendungszweck eingestellt werden. Die Einbringung der Partikel in das Kunststoffmaterial kann in einem üblichen Mischer oder aber auch in einem Extruder auf herkömmliche Weise erfolgen.

Gemäß einer bevorzugten Ausführungsform beträgt der Anteil der Metallpartikel in dem lasermarkierbaren und/oder laserschweißbaren Kunststoff 0,0005 bis 0,8 Gew.- %, vorzugsweise 0,001 bis 0,5 Gew.-%, wobei sich die Angaben jeweils auf das Gesamtgewicht des Kunststoffs beziehen.

Überraschenderweise sind die vorteilhaften Eigenschaften der vorliegenden Erfindung schon mit sehr geringen Gehalten an Lasermarkierungsmittel erreichbar. Unterhalb von 0,0005 Gew.-% Lasermarkierungsmittel können die erfindungsgemäßen Vorteile nicht mehr oder nur noch sehr eingeschränkt festgestellt werden.

Weiterhin ist bevorzugt, dass der Anteil der Metallpartikel in dem Kunststoff bei 0,005 bis 0,5 Gew.-%, noch weiter bevorzugt 0,01 bis 0,2 Gew.-%, jeweils bezogen auf das Gesamtgewicht des lasermarkierbaren Kunststoffs beträgt.

Bei den verwendeten Metallen stellte sich heraus, dass in niedrigen Konzentrationen insbesondere Metallpartikel bestehend aus Aluminium, Silber, Kupfer oder Eisen die besten Ergebnisse brachten. Somit besteht eine weitere, bevorzugte Ausführungsform aus Kunststoffen enthaltend sphärische Metallpartikel aus diesen Metallen oder Legierungen dieser Metalle, vorzugsweise in Konzentrationen von 0,0005 bis 0,015 Gew.-% bezogen auf den gesamten Kunststoff.

Die vorliegende Erfindung erlaubt es, mit einem Laserstrahl kontrastreich zu markierende oder zu beschriftende Dichtungs- und Verschlussmaterialien, Beschichtungsmaterialien und Lacke aus Kunststoff herzustellen. Ab einer Menge von 0,2 Gew.-%, bezogen auf das Gesamtgewicht des Kunststoffs, kann das Material opak werden. In einem Mengenbereich zwischen 0,05 Gew.-% und 0,2 Gew.-% kann eine erste Trübung auftreten, die sich mit zunehmender Konzentration zu einer gräulichen Einfärbung des Materials steigern kann. Oberhalb von 0,8 Gew.-% ist der Kunststoff zu opak. Zudem ist kein weiterer Vorteil der Qualität der Lasermarkierbarkeit erkennbar. Somit würde die Verwendung von mehr Lasermarkierungsmittel nur unnötig die Herstellkosten des lasermarkierbaren Materials steigern.

Der Gehalt an sphärischen Metallpartikeln im Kunststoff kann im Einzelfall in Abhängigkeit der Schichtdicke des zu markierenden Materials eingestellt werden, wobei vorzugsweise der Gehalt an sphärischen Metallpartikeln mit abnehmender Schichtdicke erhöht werden kann.

So liegt die Schichtdicke einer Folie üblicherweise in einem Bereich von 20 µm bis ca. 5 mm. Die Dicke von spritzgegossenen Kunststoffen, wie Verschlusskappen, etc., kann bis zu ca. 6 cm betragen.

Der geeignete Gehalt an sphärischen Metallpartikeln kann anhand von Versuchen vom Fachmann ohne weiteres ermittelt werden.

Eine kontrastreiche Markierung eines Kunststoffs ist - wie in den Beispielen gezeigt wird - schon mit einer Konzentration an Metallpartikel von 0,005 Gew.-% möglich. Die Konzentrationsangaben in Gew.-% beziehen sich dabei jeweils auf das Gesamtgewicht des Materials und der Metallpartikel.

Vorzugsweise liegt bei einer Schichtdicke des Kunststoffs in einem Bereich von 20 µm bis 500 µm der Anteil an Metallpartikeln in einem Bereich von 0,005 bis .0,2 Gew.-%, weiter bevorzugt von 0,02 bis .0,05, jeweils bezogen auf das Gesamtgewicht aus Kunststoff und Metallpartikel.

Bei einer Schichtdicke des Kunststoffs im Bereich von 500 µm bis 2 mm liegt der Anteil an Metallpartikeln vorzugsweise in einem Bereich von 0,001 bis 0,1 Gew.-%., weiter bevorzugt von 0,005 bis 0,05, jeweils bezogen auf das Gesamtgewicht aus Kunststoff und Metallpartikel.

Es wurde völlig überraschend festgestellt, dass - wie in den Beispielen gezeigt wird - ein Kunststoff, der Metallpartikel mit einer Menge in einem Bereich von 0,005 bis zu 0,05 Gew.-% enthält, vollkommen transparent ist und zugleich hervorragend mit einem Laserstrahl kontrastreich markiert werden kann. Vorzugsweise wird in einem Konzentrationsbereich von 0,01 bis 0,04 Gew.-% Metallpartikel gearbeitet.

Die geringe Menge an zu verwendendem Lasermarkierungsmittel bietet gleich mehrere Vorteile. So werden die Materialeigenschaften des Kunststoffmaterials nicht bzw. nicht wesentlich durch den Zusatz des erfindungsgemäßen Lasermarkierungsmittels beeinflusst.

Bei Verwendung von Metallpartikeln in einem Bereich von 0,001 bis 0,05 Gew.-% in einem transparenten oder klaren Kunststoffmaterial kommt es mithin zu keiner bzw. zu keiner wesentlichen Verschlechterung der Transparenz bzw. der Farbeigenschaften des mit dem Lasermarkierungsmittel der vorliegenden Erfindung dotierten Materials, wobei jedoch überraschenderweise ein kontrastreiches Markieren oder Kennzeichnen mit einem Laserstrahl möglich ist.

Darüber hinaus ermöglicht die vorliegende Erfindung die äußerst preisgünstige Bereitstellung eines Kunststoffmaterials, da das Lasermarkierungsmittel aus preisgünstigen Materialien hergestellt und nur in geringem Umfang dem zu markierenden Material zugesetzt werden muss. Dies ist ein wesentlicher wirtschaftlicher Vorteil der vorliegenden Erfindung.

Es ist für bestimmte Anwendungen vorteilhaft, wenn das erfindungsgemäße Dichtungs- und Verschlussmaterial, Beschichtungsmaterial und der erfindungsgemäße Lack aus Kunststoff im wesentlichen keine Perlglanzpigmente enthält. Die Nachteile von Perlglanzpigmenten in lasermarkierbaren Kunststoffen wurden weiter oben bereits ausgeführt: Perlglanzpigmente heben die meistens vorhandenen, unerwünschten Fließlinien in Kunststoffen hervor und führen zu einer farblichen Veränderung, d.h. zu einem Perlglanzeffekt. Dieser ist in gewissen Fällen aus dekorativen Gründen gewünscht, in vielen Fällen soll jedoch das Lasermarkierungsmittel die farblichen Eigenschaften des Kunststoffs nicht beeinflussen, d.h. das Lasermarkierungsmittel muss transparent sein. Der Kunststoff selbst soll ebenfalls farblos transparent oder auch monochrom eingefärbt sein (z.B. blau, rot, gelb, usw.). Eine dekorative Einfärbung durch Perlglanz ist in diesen Fällen nicht erwünscht.

Daher sollen die erfindungsgemäßen Materialien aus Kunststoff Perlglanzpigmente maximal in Mengen enthalten, in denen sie noch transparent wirken und keine Fließlinien verursachen. Demgemäß können die erfindungsgemäßen lasermarkierbaren Materialien aus Kunststoff Perlglanzpigmente in Konzentrationen von 0 bis 0,1 Gew.-%, bevorzugt von 0,0 bis 0,05 Gew.-% bezogen auf den gesamten Kunststoff, enthalten. Die genauen Konzentrationen, ab denen die nachteiligen Eigenschaften der Perlglanzpigmente nicht mehr beobachtet werden, hängen natürlich von weiteren Parametern wie insbesondere der Schichtdicke des Kunststoffs ab, können vom Fachmann jedoch ohne weiteres ermittelt werden. Weiter bevorzugt enthalten derartige erfindungsgemäße lasermarkierbare Kunststoffmaterialien im wesentlichen keine Perlglanzpigmente. Besonders bevorzugt enthalten derartige erfindungsgemäße lasermarkierbare Kunststoffmaterialien keine Perlglanzpigmente.

Die erfindungsgemäßen lasermarkierbaren Materialien aus Kunststoff können weiterhin übliche Zusatzstoffe enthalten. Diese Zusatzstoffe können beispielsweise aus der Gruppe, die aus Füllstoffen, Additiven, Weichmachern, Gleit- oder Entformungsmitteln, Schlagzähigkeitsverbesserern, Farbpigmenten, Farbstoffen, Flammschutzmitteln, Antistatika, Optischen Aufhellern, Antioxidantien, antimikrobiell wirksame Biostabilisatoren, Chemischen Treibmitteln oder organischen Vernetzungsmitteln sowie andere Zusatzstoffen oder deren Mischungen davon besteht, ausgewählt werden.

Beispiele für verwendbare Füllstoffe sind: CaCO₃ (z.B. Omya, Köln; Ulmer Füllstoff Vertrieb), Dolomit (z.B. Ziegler, Wunsiedel; Blancs Mineraux de Paris), CaSO₄ (US Gypsum, Chicago), Silikate (Degussa, Frankfurt; Quarzwerke, Frechen), Glaskugeln (Potter; GB; Owens Coming, Wiesbaden), Talkum (Norwegian Talc; Nordbayrische Farben- und Mineralwerke, Hof), Kaolin (AKW, Hirschau; Luh, Walluf), Glimmer (Norwegian Talc; Dorfner, Hirschau), Feldspat (Omya, Paris), Silikatkugeln (Langer, Ritterhude), Silica (siehe Silikate), BaSO₄ (Sachtleben, Duisburg; Scheruhn, Hof), Al₂O₃ oder Al(OH)₃.(beide: Martinswerk, Bergheim).

Die Additive können beispielsweise Dispergieradditive, Antioxidantien, Metalldesaktivatoren und/oder Licht- und UV-Schutzmittel umfassen.

Geeignete Antioxidantien (Wärmestabilisatoren) sind etwa sterisch gehinderte Phenole, Hydrochinone, Arylamine, Phosphite, verschiedene substituierte Vertreter dieser Gruppe, sowie deren Mischungen. Sie sind etwa als Topanol^{®},(ICI, London) Irgafos^{®}, Irganox^{®} , (beide Ciba-Geigy, Basel), Hostanox^{®} (Clariant, Frankfurt) oder Naugard^{®} (Uniroyal, GB) im Handel erhältlich.

Beispiele für verwendbare Metalldesaktivatoren sind: Carbonsäureamide, Hydrazone, Hydrazine, Melaminderivate, Benzotriazole, Phosphonsäureester und/oder Thiazolderivate. Spezielle Beispiele sind: Hostanox (Clariant, Frankfurt), Irganox (Ciba Geigy, Basel), Naugard (Uniroyal, GB).

Beispiele für verwendbare Licht- und UV-Schutzmittel sind: Benzophenone, Benzotriazole, org. Ni-verbindungen, Salizylsäureester, Cyanzimtsäureester, Benzylidenmalonate, Benzoesäureester, Oxalanilide und/oder sterisch gehinderte Amine, die monomer und polymer sein können. Spezielle Beispiele dafür sind: Chimasorb, Tinuvin (beide Ciba-Geigy, Basel), Cyasorb (American Cyanamid), Hostavin (Clariant, Frankfurt), Uvinul (BASF, Ludwigshafen)

Beispiele für verwendbare Weichmacher sind: Phthalsäureester, Phosphorsäureester, Adipinsäureester, Azelainsäureester, Glutarsäureester, Sebazinsäureester, Fettsäureester, vorzugsweise Oleate, Stearate, Rizinolate, Laurate und/oder Octoate, mit Pentaerythritol, Glykolen, Glyzerin u.s.w., epoxidierte Fettsäureester, Zitronensäureester, Polyester, Benzoesäureester, Trimellithsäureester, Sulfonsäureester, Sulfamide, Anilide, Polymerisate, Polykondensate, Polyethylenglykole, Abietinsäureester und/oder Derivate, Ester der Essig-, Propion-, Butter-, Ethylbutter- und/oder Ethylhexansäure.
Beispiele: Carbowax (DOW, Belgien), Cetamoll (BASF, Ludwigshafen), Edenol (Henkel, Düsseldorf), Elvaloy (DuPont de Nemours, USA), Lankroflex, (Lankro, GB), Palamoll, Palatinol (beide BASF, Ludwigshafen). Geeignete Weichmacher sind beispielsweise oft in Dichtungsmaterialien enthalten.

Beispiele für verwendbare Gleitmittel sind: Fettalkohole, Dicarbonsäureester, Fettsäureester des Glyzerins und anderer kurzkettiger Alkohole, Fettsäuren, Fettsäureamide, Metallsalze von Fettsäuren, oligomere Fettsäureester, Fettalkohol-Fettsäureester, Wachssäuren und deren Ester und Seifen, polare Polyethylenwachse und Folgeprodukte, unpolare Polyolefinwachse, natürliche und synthetische Paraffine, Siliconöle und/oder Fluorpolymere. Spezielle Beispiele sind: Licowax, Ceridust, Licolub, Licomont (alle Clariant, Frankfurt), Irgawax (Ciba-Geigy, Basel), Loxiol (Henkel, Düsseldorf), Bärolub (Bärlocher, München).

Beispiele für verwendbare Schlagzähigkeitsverbesserer sind: Elastomere (EPM bzw. EPDM, Polyacrylate, Polybutadien, Textilglasfasern, Aramidfasern und/oder Kohlenstofffasern.

Die Farbmittel können anorganische Pigmente und/oder organische Pigmente und/oder organische Farbstoffe umfassen. Es werden jedoch im wesentlichen keine Effektpigmente verwendet.

Beispiele für verwendbare Flammschutzmittel sind: Geeignete Flammschutzmittel sind z.B. die dem Fachmann bekannten halogenhaltigen Verbindungen, allein oder zusammen mit Antimontrioxid, oder phosphorhaltige Verbindungen, Magnesiumhydroxid, roter Phosphor, sowie andere gebräuchliche Verbindungen oder deren Mischungen. Unter bekannte Flammschutzmittel fallen z.B. die in der DE-A 196 326 75 oder die in der Encyclopedia of Chemical Technology, Hrsg. R. Kirk und D. Othmer, Vol. 10, 3. Aufl., Wiley, New York, 1980, Seiten 340 bis 420, offenbarten Phosphorverbindungen, wie Phosphate, z.B. Triarylphosphate wie Triskresylphosphat, Phosphite, z.B. Triarylphosphite, oder Phosphonite. Als Phosphonite werden in der Regel Bis-(2,4-di-tert.butylphenyl)-phenylphosphonit, Tris- (2,4-di-tert.butylphenyl) -phosphonit, Tetrakis-(2,4-di-tert.butyl-6-methylphenyl) -4,4' -biphenylylen-diphosphonit, Tetrakis-(2,4-di-tert.butylphenyl) - 4,4'-biphenylylendiphosphonit, Tetrakis-(2,4-di-methylphenyl) -1,4-phenylylendiphosphonit, Tetrakis-(2,4-di-tert.butylphenyl) -1,6-hexylylen- diphosphonit und/oder Tetrakis-(3,5-di-methyl-4-hydroxyphenyl) -4,4' -biphenylylen-diphosphonit, Tetrakis- (3,5-di-tert.butyl-4 -hydroxy-phenyl) -4,4' -biphenylylen-diphosphonit verwendet. Spezielle Beispiele sind: Fire Fighters (Great Lakes Chemicals), Fyrol (Dead Sea Bromine, Israel, Martinal (Martinswerk, Bergheim), Reofos (Ciba-Geigy, Basel), Phosflex (Akzo Chemicals, USA).

Beispiele für verwendbare Antistatika sind: Ethoxylierte Fettamine, aliphatische Sulfonate, quartäre Ammoniumverbindungen und/oder polare Fettsäureester. Geignete spezielle Beispiele dafür sind: Bärostat (Bärlocher, München), Dehydat (Henkel, Düsseldorf), Hostastat (Clariant, Frankfurt), Irgastat (Ciba-Geigy, Basel).

Beispiele für verwendbare optische Aufheller sind: Bis-Benzotriazole, Phenylcumarinderivate, Bis-styrylbiphenyle und/oder Pyrentriazine. Spezielle Beispiele sind: Hostalux (Clariant, Frankfurt), Uvitex (Ciba-Geigy, Basel).

Antimikrobiell wirksame Biostabilisatoren (Biozide) sind im Stand der Technik bekannt. Beispiele dafür sind: 10,10'-(Oxy-bis-phenoxarsin, N-(Trihalogenmethylthio-)phthalimid, Cu-8-hydroxychinolin, Tributylzinnoxid und/oder deren Derivate, z.B. Cunilate (Ventron, B), Preventol (Bayer, Leverkusen), Fungitrol (Tenneco, USA).

Beispiele für verwendbare chemische Treibmittel sind: Hydrogencarbonat oder Zitronensäure+NaHCO₃, z.B. Hydrocerol 8 (Böhringer, Ingelheim).

Beispiele für verwendbare organische Vernetzungsmittel sind: Diaralkylperoxide, Alkylaralkylperoxide, Dialkylperoxide, tert.-Butylperoxybenzoat, Diacylperoxide und/oder Peroxyketale, z.B. Interox (Peroxidchemie, Höllriegelskreuth), Luperco, Luperox (Luperox, Günzburg).

Die vorliegende Erfindung ermöglicht mithin eine berührungslose und unveränderliche Beschriftung oder Kennzeichnung von erfindungsgemäßen Dichtungs- und Verschlussmaterialien aus Kunststoff, sowie die berührungslose und unveränderliche Kennzeichnung von Gegenständen, die mit dem erfindungsgemäßen Beschichtungsmaterial oder Lack aus Kunststoff beschichtet bzw. lackiert sind. Beispielsweise kann mit erfindungsgemäßem Material ein Behälter, einschließlich eines Lebensmittelbehälters, verschlossen oder beschichtet werden. Die Beschriftung oder Kennzeichnung kann sowohl vor als auch nach dem Einfüllen eines Inhaltsstoffes erfolgen.

Das lasermarkierbare Dichtungs- und Verschlussmaterial aus Kunststoff, als auch das lasermarkierbare Beschichtungsmaterial und der lasermarkierbare Lack aus Kunststoff der Erfindung können ein Bestanteil eines Gegenstandes, der selbst nicht lasermarkierbar und/oder laserschweißbar sein muss, sein.

Die Beschriftung mit einem handelsüblichen Laser erfolgt derart, dass ein Probenkörper in den Strahlengang eines Lasers gebracht wird. Die erhaltene Markierung wird durch die Bestrahlungszeit (bzw. Pulszahl bei Pulslasern) und Bestrahlungsleistung des Lasers sowie des Kunststoffsystems, bestimmt. Die Leistung der verwendeten Laser hängt von der jeweiligen Anwendung ab und kann im Einzelfall vom Fachmann ohne weiteres ermittelt werden.

Prinzipiell sind alle üblichen Laser geeignet, beispielsweise Gaslaser und Festkörperlaser. Gaslaser sind z.B. (in Klammem ist die typische Wellenlänge der emittierten Strahlung angegeben):
CO₂-Laser (10,6 nm), Argon-Gaslaser (488 nm und 514,5 nm), Helium-Neon-Gaslaser (543 nm, 632,8 nm, 1150 nm), Krypton-Gaslaser (330 bis 360 nm, 420 bis 800 nm), Wasserstoff-Gaslaser (2600 bis 3000 nm) und Stickstoff-Gaslaser (337 nm).

Festkörperlaser sind z.B. (in Klammern die typische Wellenlänge der emittierten Strahlung):
Nd:YAG-Laser (Nd³⁺Y₃Al₅O₁₂) (1064 nm) Hochleistungsdioden-Laser (800 bis 1000 nm), Rubinlaser (694 nm), F₂-Excimerlaser (157 nm), ArF-Excimerlaser (193 nm), KrCl-Excimerlaser (222 nm), KrF-Excimerlaser (248 nm) XeCl-Excimerlaser (308 nm), XeF-Excimerlaser (351 nm) sowie frequenzvervielfachte Nd:YAG-Laser mit Wellenlängen von 532 nm (frequenzverdoppelt), 355 nm (frequenzverdreifacht) oder 266 nm (frequenzvervierfacht).

Bevorzugte Laser für Laserbeschriftungen sind der Nd:YAG-Laser (Nd³⁺Y₃Al₅O₁₂) (1064 nm).
Für die Laserschweißbarkeit ist bevorzugt der Nd:YAG-Laser (Nd³⁺Y₃Al₅O₁₂) (1064 nm) sowie der Hochleistungsdioden-Laser (800 bis 1000 nm), die beide im kurzwelligen Infrarot emittieren.

Die verwendeten Laser werden üblicherweise bei Leistungen von 1 bis 400, bevorzugt 5 bis 100 und insbesondere 10 bis 50 Watt betrieben.

Die Energiedichten der eingesetzten Laser liegen im allgemeinen im Bereich von 0,3 mJ/cm² bis 50 J/cm² vorzugsweise 0,3 mJ/cm² bis 10 J/cm². Bei der Verwendung von gepulsten Lasern liegt die Pulsfrequenz im allgemeinen im Bereich von 1 bis 30 kHz. Entsprechende Laser, die vorliegend verwendet werden können, sind kommerziell erhältlich.

Ein sehr großer Vorteil des erfindungsgemäßen Lasermarkierungsmittels ist, dass die Wellenlänge des Laserstrahls nicht spezifisch auf die sphärischen Metallpartikel eingestellt werden muss. Metalle haben im Unterschied zu Metalloxiden ein breites Absorptionsvermögen, weshalb unterschiedlichste Laser mit verschiedenen Wellenlängen zur Lasermarkierung eines mit dem erfindungsgemäßen Lasermarkierungsmaterial dotierten Kunststoffs verwendet werden können.

Im Stand der Technik werden teilweise Metalloxide wie Antimon-dotiertes Zinnoxid als Absorbermaterialien verwendet. Ungeachtet der toxikologischen Risiken erfordern diese Oxide die Verwendung einer definierten Wellenlänge an Laserlicht, um eine Markierung bewirken zu können, was in der Handhabung aufwändig ist.

Die Verwendung des erfindungsgemäßen lasermarkierbaren Dichtungs- oder Verschlussmaterials aus Kunststoff und des erfindungsgemäßen lasermarkierbaren Beschichtungsmaterials und des lasermarkierbaren Lacks kann auf einer Vielzahl von Gebieten erfolgen, in denen Dichtungs-, Verschluss-, Beschichtungsmaterialien und Lacke zum Einsatz kommen, und ist in dieser Hinsicht nicht beschränkt. Beispielsweise kann die vorliegende Erfindung bei Behältern für Körperpflege oder Kosmetik verwendet werden. Die erfindungsgemäßen Gegenstände können selbst an schwer zugänglichen Stellen mit Hilfe von Laserlicht markiert werden. Weiterhin kommt der Einsatz im Lebensmittelbereich oder im Spielzeugbereich in Frage. Die Markierungen in Sinne der Erfindung zeichnen sich insbesondere dadurch aus, dass sie wisch- und kratzfest, stabil bei nachträglichen Sterilisationsprozessen, und hygienisch rein beim Markierungsprozess aufbringbar sind.

Technische Vorteile der in der vorliegenden Erfindung verwendeten sphärischen Metallpartikel werden anhand der nachfolgenden Beispiele veranschaulicht, ohne jedoch darauf beschränkt zu sein.

### Beispiel 1:

Ein Pulver aus sphärischen Aluminiumpartikeln (Fa. ECKART GmbH & Co. KG, Fürth, Deutschland) mit einem D₅₀-Wert von 1,57 µm, einem D₉₀-Wert von 3,37 µm und einem D₉₉-Wert von 7,55 µm (bestimmt mittels Lasergranulometrie mit Gerät Helos, Fa. Sympatec, Deutschland) wurde in Mischung mit thermoplastischem Polypropylen (PP) (R 771 - 10; Fa. DOW, Deutschland, Wesseling) im Spritzgussverfahren zu Platten (Fläche 42 × 60 mm, Dicke 2 mm) verarbeitet.

Zur Herstellung einer 1 Gew.-%igen Mischung wurde wie folgt verfahren:
495 g Polypropylen-Granulat und 5 g des Aluminium-Pulvers wurden in einem Taumelmischer vermischt und nachfolgend in einem Doppelschneckenextruder (Fa. Bersdorff, Deutschland, Durchmesser 25 mm, 28L/D) ohne Zugabe weiterer Additive bei einer Verarbeitungstemperatur von ca. 230 °C zu einem Granulat verarbeitet. Dieses Granulat wurde anschließend mittels Spritzgießmaschine (Arburg Allrounder 221-55-250) bei der jeweiligen stoffspezifischen Verarbeitungstemperatur (z.B. PP 260 °C) zu den Muster-Plättchen mit den oben genannten Abmessungen verarbeitet.

Es wurden Konzentrationsreihen unter Zusatz von 1,0 Gew.-%, 0,5 Gew.-%, 0,2 Gew.-%, 0,1 Gew.-% 0,05 Gew.-%, 0,02 Gew.-%, 0,01 Gew.-%, 0,005 Gew.-% und 0 Gew.-% sphärischer Aluminiumpartikel in Polypropylen gefertigt und die jeweils erhaltenen Plättchen mit einem Nd:YAG-Laser (Wellenlänge: 1064 nm; Leistung: 8 W, Impulsfrequenz: 5 KHz; Schreibgeschwindigkeiten: 50 - 250 mm/s) beschriftet. Die Angaben in Gew.-% beziehen sich dabei auf das Gesamtgewicht von Aluminiumpartikeln und PP.

PP-Platten ohne einen Gehalt an sphärischen Aluminiumpartikeln waren nicht mit dem Nd:YAG-Laser markierbar.

Bei Verwendung der sphärischen Aluminiumpartikel ab einer Menge von 0,005 Gew.-% zu PP konnten kontrastreiche, dunkle und abriebfeste Markierungen erhalten werden, die eine exzellente Randschärfe und Punktgenauigkeit aufwiesen. Die PP-Platten blieben dabei transparent und farbneutral.

Bei einem Gehalt an sphärischen Aluminiumpartikeln in einem Bereich von 0,05-0,5 Gew.-% wurde zunehmend eine gräuliche Einfärbung festgestellt, die mit einem Verlust an Transparenz einherging. PP-Platten mit einem Gehalt an sphärischen Aluminiumpartikeln von mehr als 0,5 Gew-% waren grau-opak.

Es konnten keinerlei störenden Grobpartikel oder Flitter beobachtet werden. Zudem waren hierbei bereits in niedrigen Konzentrationsbereichen (0,005-0,02 Gew.-%) mit höheren Schreibgeschwindigkeiten (150-200 mm/s, 8 W, Impulsfrequenz: 5 KHz.) des Lasers exzellente Punktgenauigkeiten und hohe Kontraste gewährleistet.
Es konnten keine Fließlinien oder Schlieren in den PP-Platten, die die sphärischen Aluminiumpartikel enthielten, beobachtet werden.

### Beispiel 2:

Sphärische Aluminiumpartikel (Fa. ECKART) mit einem D₅₀-Wert von 2,50 µm, einem D₉₀-Wert von 5,46 µm und einem D₉₉-Wert von 11,6 µm (bestimmt mit dem Helos-Gerät wie in Beispiel 1) wurden in Entsprechung zu Beispiel 1 mit PP verarbeitet.

Die erhaltenen Ergebnisse entsprachen den in Beispiel 1 beschriebenen.

### Beispiel 3:

Sphärische Aluminiumpartikel (Fa. ECKART) mit einem D₅₀-Wert von 2,27 µm, einem D₉₀-Wert von 3,83 µm und einem D₉₉-Wert von 5,28 µm (bestimmt mit dem Helos-Gerät wie in Beispiel 1) wurden in Entsprechung zu Beispiel 1 mit PP verarbeitet.

Die erhaltenen Ergebnisse entsprachen den in Beispiel 1 beschriebenen.

### Beispiel 4:

Sphärische Aluminiumpartikel (Fa. ECKART) mit einem D₅₀-Wert von 17,5 µm, einem D₉₀-Wert von 34,5 µm und einem D₉₉-Wert von 62,0 µm (bestimmt mit dem Helos-Gerät wie in Beispiel 1) wurden in Entsprechung zu Beispiel 1 mit PP verarbeitet.

Ab Zusätzen von 0,005 Gew.-% sphärischer Aluminiumpartikel in PP konnten kontrastreiche, dunkle und abriebfeste Markierungen erhalten werden, die eine sehr gute Randschärfe und Punktgenauigkeit aufwiesen. Die PP-Platten blieben dabei transparent und farbneutral. Bei Mengen in einem Bereich von 0,1-1,0 Gew.-% sphärischer Aluminiumpartikel wurde zunehmend eine gräuliche Einfärbung festgestellt, die mit einem Verlust an Transparenz einherging. PP-Platten mit einem Gehalt an sphärischen Aluminiumpartikeln von mehr als 1,0 Gew-% waren grau-opak.
Die Ausbildung glitzernder Flitter wurde hier nur geringen Anteilen beobachtet.
Es konnten keine Fließlinien oder Schlieren in den PP-Platten, die die sphärischen Aluminiumpartikel enthielten, beobachtet werden.

### Beispiel 5:

Sphärische Aluminiumpartikel (Fa. ECKART) mit einem D₅₀-Wert von 39,3 µm, einem D₉₀-Wert von 69,1 µm und einem D₉₉-Wert von 104 µm (bestimmt mit dem Helos-Gerät wie in Beispiel 1) wurden in Entsprechung zu Beispiel 1 mit PP verarbeitet.

Bei Mengen in einem Bereich von 0,005-0,1 Gew.-% sphärischer Aluminiumpartikel in PP konnten kontrastreiche, dunkle und abriebfeste Markierungen erhalten werden, die eine gute Randschärfe und Punktgenauigkeit aufwiesen. Die PP-Platten blieben dabei transparent und farbneutral. Bei Mengen in einem Bereich von 0,1-1,0 Gew.-% sphärischer Aluminiumpartikel wurde zunehmend eine gräuliche Einfärbung festgestellt, die mit einem Verlust an Transparenz einherging. PP-Platten mit einem Gehalt an sphärischen Aluminiumpartikeln von mehr als 1,0 Gew-% waren grau-opak.
Über den gesamten Konzentrationsbereich konnten teilweise Partikel und die Ausbildung glitzernder Flitter beobachtet werden.
Es konnten keine Fließlinien oder Schlieren in den PP-Platten, die die sphärischen Aluminiumpartikel enthielten, beobachtet werden.

### Vergleichsbeispiel 6:

Sphärische Aluminiumpartikel (Fa. ECKART) mit einem D₅₀-Wert von 140 µm und einem D₉₀-Wert von 230 µm (D₉₉-Wert: nicht bestimmbar) (bestimmt mit dem Helos-Gerät wie in Beispiel 1) wurden in Entsprechung zu Beispiel 1 mit PP verarbeitet.
Bei Mengen ab einem Bereich von 0,05 Gew.-% sphärischer Aluminiumpartikel in PP konnten kontrastreiche, dunkle und abriebfeste Markierungen erhalten werden, die eine sehr geringe Randschärfe und Punktgenauigkeit aufwiesen und somit ungenügend waren. Die PP-Platten blieben dabei transparent und farbneutral. Bei Mengen in einem Bereich von 0,2-2,0 Gew.-% sphärischer Aluminiumpartikel wurde zunehmend eine gräuliche Einfärbung festgestellt, die mit einem Verlust an Transparenz einherging. PP-Platten mit einem Gehalt an sphärischen Aluminiumpartikeln von mehr als 2,0 Gew-% waren grau-opak. Über den gesamten Konzentrationsbereich konnten signifikante Anteile an Grobpartikeln und eine signifikante Ausbildung glitzernder Flitter beobachtet werden.
Es konnten keine Fließlinien oder Schlieren in den PP-Platten, die die sphärischen Aluminiumpartikel enthielten, beobachtet werden.

### Vergleichsbeispiel 7:

Feine, plättchenförmige Aluminiumeffektpigmente (PC 200, Fa. Eckart GmbH & Co KG, Fürth, Deutschland) mit einem D₁₀-Wert von 1,51 µm, D₅₀-Wert von 4,02 µm und einem D₉₀-Wert von 10,0 µm (bestimmt mit dem Helos-Gerät wie in Beispiel 1) wurden mit PP in Entsprechung zu Beispiel 1 verarbeitet.

Bei Mengen an sphärischen Aluminiumpartikeln von ≥0,005 Gew.-% ließen sich Markierungen erhalten. Dabei wiesen die PP-Platten bereits bei diesem Gehalt an Aluminiumeffektpigmenten eine Grautrübung auf. Bei einer Menge von 0,01 Gew.-% Aluminiumeffektpigmente war die Grautrübung vergleichbar mit der in Beispiel 1 bei einem Gehalt an sphärischen Aluminiumpartikeln von ≥0,1% Gew.-% erhaltenen Grautrübung. Bereits bei einem Pigmentgehalt von 0,02 Gew.-% Aluminiumeffektpigmente waren die Platten grau-opak.

Die Markierungen waren kontrastreich, dunkel und abriebfest, zeigte jedoch im Vergleich zu Beispiel 1 eine verminderte Punktgenauigkeit. Es waren die bei Verwendung von plättchenförmigen Pigmenten in der Kunststoffmasse durch Spritzgießen erhaltenen Produkte typische Fließlinien bzw. Schlieren zu beobachten.

### Vergleichsbeispiel 8:

Antimon-dotierte Zinnoxid-Partikel (Mark-it^{™}-Pigmente, Fa. Engelhard Corporation, USA) wurden mit PP in Entsprechung zu Beispiel 1 verarbeitet.

Die erhaltenen PP-Platten zeigten vergleichbare Eigenschaften zu den in Beispiel 1 und 2 hergestellten PP-Platten, jedoch mit geringfügig herabgesetzten Punktgenauigkeiten. Anstelle der in den Beispielen 1, 2 und 3 erhaltenen Graufärbung trat hier bei einem Pigmentgehalt von ≥0,1% Gew.-% eine bräunliche Färbung auf. Die Bildung von Fließlinien oder Schlieren konnte nicht beobachtet werden. Die verwendeten Mark-it^{™}-Pigmente enthalten jedoch hoch-toxisches Antimon.

### Vergleichsbeispiel 9:

Glimmerplättchen mit Antimon-dotierter Zinnoxid-Beschichtung (Lazerflair^{®} 825, Fa. E. Merck KGaA, Deutschland) wurden mit PP in Entsprechung zu Beispiel 1 verarbeitet.

Die PP-Platten zeigten vergleichbare Eigenschaften zu den in Beispiel 1 und 2 erhaltenen PP-Platten. Jedoch waren hier über alle Konzentrationsbereiche zwar gute, aber im Vergleich zu Beispiel 1,2,3 und 8 waren verminderten Punktgenauigkeiten zu beobachten, eine erste Trübung trat bei Konzentrationen von ≥0,1% Gew.-% ein und das Medium wurde bei Konzentrationen von ≥2,0 Gew.-% opak.
Anstelle einer bei einem Aluminiumpartikelgehalt von ≥0,1% Gew.-% in den Beispielen 1 und 2 erhaltenen Graufärbung trat in analoger Weise bei den Lazerflair^{®} 825-Pigmenten eine grünliche Einfärbung auf. In den spritzgegossenen Platten waren die beim Spritzgießen von plättchenförmigen Effektpigment-haltigen Kunststoffmassen typischen Fließlinien bzw. Schlieren zu beobachten. Das Pigment Lazeflair^{®} 825 enthält ebenfalls toxisches Antimon.

### Beispiel 10:

Ein Pulver aus sphärischen Aluminiumpartikeln (Fa. ECKART) mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurden in Mischung mit thermoplastischem Polystyrol (PS) (Styron 678-E, Fa. DOW, USA) mittels Spritzgießverfahren zu Platten (Fläche 42 × 60 mm, Dicke 2 mm) in Entsprechung zu Beispiel 1 verarbeitet.

PS-Platten ohne einen Gehalt an sphärischen Aluminiumpartikeln waren nur schwer markierbar. Bei Verwendung von sphärischen Aluminiumpartikeln konnten bei einem Gehalt von 0,005 Gew.-% sphärischer Aluminiumpartikel mittels Laser Markierungen erhalten werden. Bei einem Gehalt ab 0,02 Gew.-% sphärischer Aluminiumpartikel konnten kontrastreiche, dunkle und abriebfeste Markierungen erhalten werden, die eine befriedigende Randschärfe und Punktgenauigkeit aufwiesen. Die PS-Platten blieben dabei transparent und farbneutral. Bei Mengen in einem Bereich von 0,05-0,5 Gew.-% sphärischer Aluminiumpartikel wurde zunehmend eine gräuliche Einfärbung der PS-Platten festgestellt, die mit einem Verlust an Transparenz einherging. PS-Platten mit einem Gehalt ab 0,5 Gew.-% sphärischer Aluminiumpartikel waren grau-opak. Es konnten keine Fließlinien oder Schlieren beobachtet werden.

### Beispiel 11:

Ein Pulver aus sphärischen Aluminiumpartikeln (Fa. ECKART) mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurden in Mischung mit thermoplastischen Polycarbonat (PC) (Calibre 201 TNT; Fa. DOW, USA) im Spritzgießverfahren zu Platten (Fläche 42 × 60 mm, Dicke 2 mm) in Entsprechung zu Beispiel 1 verarbeitet.

PC-Platten ohne einen Gehalt an sphärischen Aluminiumpartikeln waren nur schwer markierbar. Ab Mengen von 0,005 Gew.-% sphärischer Aluminiumpartikel wurden kontrastreiche, dunkle und abriebfeste Markierungen erhalten. Die Ergebnisse in den weiteren Mengenbereichen entsprachen den in Beispiel 1 erhaltenen Ergebnissen.

### Beispiel 12:

Ein Pulver aus sphärischen Aluminiumpartikeln (Fa. ECKART) mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurden in Mischung mit thermoplastischen Polyethylentherephthalat (PET) (Suka 5141, Fa. Du Pont, USA) im Spritzgießverfahren zu Platten (Fläche 42 × 60 mm, Dicke 2 mm) in Entsprechung zu Beispiel 1 verarbeitet.

PET-Platten ohne einen Gehalt an sphärischen Aluminiumpartikeln waren nur schwer markierbar. Bei Mengen von 0,005 Gew.-% sphärischer Aluminiumpartikel waren die PET-Platten markierbar. Ab Mengen von 0,005 Gew.-% wurden kontrastreiche, dunkle und abriebfeste Markierungen erhalten. Die Ergebnisse in den weiteren Mengenbereichen entsprachen den in Beispiel 1 erhaltenen Ergebnissen, bei guten, aber verminderten Punktgenauigkeiten.

### Beispiel 13

Ein Pulver aus sphärischen Aluminiumpartikeln (Fa. ECKART) mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurden in Mischung mit thermoplastischen Styrol-Acrylnitril (SAN) (Tyril 867 E; Fa. DOW, USA) im Spritzgießverfahren in Entsprechung zu Beispiel 1 zu Platten (Fläche 42 × 60 mm, Dicke 2 mm) verarbeitet.

SAN-Platten ohne einen Gehalt an sphärischen Aluminiumpartikeln waren nur schwer markierbar. Bei einem Gehalt von 0,01 Gew.-% sphärischer Aluminiumpartikel waren die SAN-Platten markierbar. Ab einem Gehalt von 0,02 Gew.-% sphärischer Aluminiumpartikel wurden kontrastreiche, dunkle und abriebfeste Markierungen erhalten. Die Ergebnisse in den weiteren Mengenbereichen entsprachen den in Beispiel 1 erhaltenen Ergebnissen bei guten, aber leicht verminderten Punktgenauigkeiten.

### Beispiel 14:

Ein Pulver aus sphärischen Aluminiumpartikeln (Fa. ECKART) mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurden in Mischung mit thermoplastischen Acryl-Butadien-Styrol-Copolymer (ABS) (Magnum 8433, Fa. DOW, USA) im Spritzgießverfahren in Entsprechung zu Beispiel 1 zu Platten (Fläche 42 × 60 mm, Dicke 2 mm) verarbeitet.

ABS-Platten ohne einen Gehalt an sphärischen Aluminiumpartikeln waren nur schwer markierbar. Bei einem Gehalt von 0,005 Gew.-% an sphärischen Aluminiumpartikeln wurden kontrastreiche, dunkle und abriebfeste Markierungen in hellem ABS erhalten, die eine exzellente Randschärfe und Punktgenauigkeit aufwiesen. Die Platten blieben dabei farbneutral, da ABS ist als Material selbst nicht transparent ist.

Bei einem Gehalt von sphärischen Aluminiumpartikeln in einem Bereich von 0,05-0,1 Gew.-% wurde zunehmend eine gräuliche Einfärbung beobachtet. Die ABS-Platten mit einem Gehalt von 0,2% Gew.-% sphärischer Aluminiumpartikel waren grau. Es wurden keine Fließlinien oder Schlieren beobachtet.

### Beispiel 15:

Ein Pulver aus sphärischen Aluminiumpartikeln (Fa. ECKART) mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurden in Mischung mit Polyethylen niedriger Dichte (LDPE) (LDPE 410-E, Fa. DOW, USA) zu Blasfolien mit einer Dicke von 100 µm mittels Folienextruder Scientific (Fa. LabTech, Thailand) verarbeitet.

Es wurde eine Konzentrationsreihe unter Zusatz von 2,0 Gew.-%, 1,0 Gew.-%, 0,5 Gew.-%, 0,2 Gew.-%, 0,1 Gew.-%, 0,05 Gew.-% und 0,02 Gew.-% gefertigt.
Die LDPE-Folien waren ohne einen Gehalt an sphärischen Aluminiumpartikeln nicht markierbar. In einem Bereich von 0,02-0,5 Gew.-% sphärischer Aluminiumpartikel wurden bei Laserbehandlung kontrastreiche, dunkle und abriebfeste Markierungen auf transparenten und farbreinen Folien erhalten werden. Eine exzellente Punktgenauigkeit und Abbildungsschärfe war zu beobachten. Bei einem Gehalt von ≥0,5 Gew.-% sphärischer Aluminiumpartikel wurde eine zunehmende Graufärbung der Folien beobachtet.

### Beispiel 16:

Ein Pulver aus sphärischen Aluminiumpartikeln (Fa. ECKART) mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurden in Mischung mit thermoplastischem Polyamid PA6 (Gerstamid R 200 S; Fa. Resin Express, Deutschland) im Spritzgießverfahren in Entsprechung zu Beispiel 1 zu Platten (Fläche 42 × 60 mm, Dicke 2 mm) verarbeitet.

PA6-Platten ohne einen Gehalt an sphärischen Aluminiumpartikeln waren nicht markierbar. Die Ergebnisse in den weiteren Mengenbereichen entsprachen den in Beispiel 14 erhaltenen Ergebnissen.

In der nachfolgenden Tabelle sind die Beispiele und ihre Ergebnisse nochmals zusammengestellt.

**Tabelle I: Zusammenstellung der Ergebnisse der Beispiele**

| **Beispiel** | **Additiv** | **Polymer** | **Markierbarkeit des Polymers ohne Zusatz** | **Konzentrationen für kontrastreiche Markierung [Gew.-%]** | **Konzentrationen bei denen Trübung auftritt [Gew.%]** | **Konzentrationen bei denen Einfärbung auftritt [Gew.%]** | **Konzentrationen mit Verlust von Transparenz (opakes Medium) [Gew.-%]** | **Punktgenauigkeit** | **Auftreten von sichtbaren Partikeln (z.B. Grobpartike I oder Flitter)** |
|---|---|---|---|---|---|---|---|---|---|
| 1 | Al-Pulver (sphärisch) | PP | nicht markierbar | ≥ 0,005 | ≥ 0,05 | ≥ 0,1 (gräulich) | ≥ 0,5 | exzellent | nein |
| 2 | Al-Pulver (sphärisch) | PP | nicht markierbar | ≥ 0,005 | ≥ 0,05 | ≥ 0,1 (gräulich) | ≥ 0,5 | exzellent | nein |
| 3 | Al-Pulver (sphärisch) | PP | nicht markierbar | ≥ 0,005 | ≥ 0.05 | ≥ 0,1 (gräulich) | ≥ 0,5 | exzellent | nein |
| 4 | Al-Pulver (sphärisch) | PP | nicht markierbar | ≥ 0,005 | ≥ 0,1 | ≥ 0,2 (gräulich) | ≥ 1,0 | sehr gut | minimal |
| 5 | Al-Pulver (sphärisch) | PP | nicht markierbar | ≥ 0,005 | ≥ 0,1 | ≥ 0,2 (gräulich) | ≥ 1,0 | gut | ja |
| 6 (Vergleich) | Al-Pulver (sphärisch) | PP | nicht markierbar | ≥ 0,05 | ≥ 0,2 | ≥ 0,5 (gräulich) | ≥ 2,0 | ungenügend | signifikant |
| 7 (Vergleich) | Al-Pigment (plättchenförmig) | PP | nicht markierbar | ≥ 0,005 | ≥ 0,005 | ≥ 0,01 (gräulich) | ≥ 0,02 | gut | nein |
| 8 (Vergleich) | Mark-it^{™} (Antimon-dotierte Zinnoxid-Partikel) | PP | nicht markierbar | ≥ 0,005 | ≥ 0,05 | ≥ 0,1 (bräunlich) | ≥ 0,5 | exzellent | nein |
| 9 (Vergleich) | Lazerflair^{®} 825 (Glimmerplättchen mit Antimon-dotierter Zinnoxid-Beschichtung) | PP | nicht markierbar | ≥ 0,005 | ≥ 0,1 | ≥ 0.1 (gräulich) | ≥ 2,0 | gut | nein |
| 10 | Al-Pulver (sphärisch) | PS | schwer markierbar | ≥ 0,02 | ≥ 0,05 | ≥ 0,1 (gräulich) | ≥ 0,5 | befriedigend | nein |
| 11 | Al-Pulver (sphärisch) | PC | schwer markierbar | ≥ 0,005 | ≥ 0,05 | ≥ 0,1 (gräulich) | ≥ 0,5 | exzellent | nein |
| 12 | Al-Pulver (sphärisch) | PET | schwer markierbar | ≥ 0,005 | ≥ 0,05 | ≥ 0,1 (gräulich) | ≥ 0,5 | gut | nein |
| 13 | Al-Pulver (sphärisch) | SAN | schwer markierbar | ≥ 0,02 | ≥ 0,05 | ≥ 0,1 (gräulich) | ≥ 0,5 | gut | nein |
| 14 | Al-Pulver (sphärisch) | ABS | schwer markierbar nicht | ≥ 0,005 | ≥ 0,05 | ≥ 0,1 (gräulich) | ABS ist nicht transparent | exzellent | nein |
| 15 | Al-Pulver (sphärisch) | LDPE | markierbar | ≥ 0,02 | ≥ 0,05 | ≥ 0,05 (gräulich) | ≥ 0,05 | sehr gut | nein |
| 16 | Al-Pulver (sphärisch) | PA6 | nicht markierbar | ≥ 0,005 | ≥ 0,05 | ≥ 0,1 (gräulich) | PA 6 ist nicht transparent | exzellent | nein |

Wie aus der zusammenfassenden Tabelle 1 ersichtlich ist, ermöglicht die Verwendung von sphärischen Metallpartikel im Sinne der vorliegenden Erfindung die Bereitstellung von lasermarkierbaren Kunststoffen, die transparent und zugleich mit sehr gutem Kontrast und hoher Abbildungsschärfe mit einem Laser markierbar sind.

Eine sehr gute kontrastreiche Markierung ist in der Regel ab einem Gehalt von sphärischen Aluminiumpartikeln von 0,005 Gew.-%, bezogen auf das Gesamtgewicht der Kunststoffmasse, erhältlich. Eine Graufärbung oder Trübung erfolgt in der Regel ab einem Gehalt von sphärischen Aluminiumpartikeln von 0,05 Gew.-%.

Aus dem Vergleichsbeispiel 7 ist ersichtlich, dass bei Verwendung von Aluminiumeffektpigmenten mit vergleichbarer Partikelgröße eine Trübung oder Graufärbung dann auftritt, wenn der Kunststoff auch lasermarkierbar wird. Der Grenzwert liegt hier jeweils bei 0,005 Gew.-%.

Aus dem Vergleich mit den Vergleichsbeispielen 5 und 6 ist ersichtlich, dass die vorliegende Erfindung die Bereitstellung von lasermarkierbaren Kunststoffen ohne Verwendung von hochtoxischen Antimon-haltigen Verbindungen oder Partikeln ermöglicht.

Aus den nachfolgenden Vergleichsbeispielen 17 und 18 sowie dem Beispiel 19 geht hervor, dass es bei Verwendung von Perlglanzpigmenten als Lasermarkierungsmittel zur Sichtbarmachung bzw. zum Auftreten von Fließlinien kommt.

### Vergleichsbeispiel 17: (in Anlehnung an die EP 1 145 864 A1)

Analog zu Beispiel 1 wurde in Polypropylen (PP) ein silbernes Perlglanzpigment (PX1001, Fa. ECKART) in einer Konzentration von 0,49 Gew.-% verarbeitet. Hierbei konnten kontrastreiche, dunkle und abriebfeste Markierungen erhalten werden, die eine befriedigende bis ausreichende Randschärfe und Punktgenauigkeit aufwiesen. Die PP-Platten waren dabei jedoch perlglänzend-hell und opak. Die Ausbildung von Fließlinien in den PP-Platten war sehr deutlich zu beobachten.

### Vergleichsbeispiel 18: (in Anlehnung an die EP 1 145 864 A1)

Analog zu Beispiel 1 wurde in Polypropylen (PP) ein silbernes Perlglanzpigment (PX1001, Fa. ECKART) in einer Konzentration von 0,49 Gew.-% und Zink-Pulver, welches eine Korngrößenverteilung: D₁₀: 1,9 µm; D₅₀: 3,4 µm; D₉₀: 6 µm aufwies (Zink-Staub 17640, Hersteller: Fa. Norzinko GmbH, Goßlar, Deutschland) in 0,0098 Gew.-% mit PP verarbeitet.

Die Ergebnisse entsprachen exakt den unter Vergleichsbeispiel 17 genannten.

### Beispiel 19:

Analog zu Beispiel 1 wurde Zink-Pulver (Zink-Staub 17640, Fa. Norzinko GmbH, Goßlar, Deutschland) mit Polypropylen (PP) verarbeitet.
Bei Verwendung des Zink-Pulvers ab einer Menge von 0,005% zu PP konnten kontrastreiche, dunkle und abriebfeste Markierungen erhalten werden, die eine befriedigende Randschärfe und Punktgenauigkeit aufwiesen. Ab Zusätzen von 0,05 Gew.-% wurden sehr gute Punktgenauigkeiten und Randschärfen erhalten.
Die PP-Platten blieben dabei transparent und farbneutral.

Ab einem Gehalt an Zink-Pulver von 0,05 Gew.-% wurde zunehmend eine gräuliche Einfärbung festgestellt, die mit einem Verlust an Transparenz einherging. PP-Platten mit einem Gehalt an Zink-Pulver von mehr als 1,0 Gew-% waren grau-opak. Allerdings ließen sich nur gute Markierungen bei geringeren Schreibgeschwindigkeiten des Nd:YAG-Lasers (50 mm/s, 8 W, Impulsfrequenz: 5 KHz.) mit einer sehr guten Punktgenauigkeit und hohem Kontrast erreichen.

Es konnten keine Fließlinien oder Schlieren in den PP-Platten, die die sphärischen Aluminiumpartikel enthielten, beobachtet werden.

### Beispiel 20:

Analog zu Beispiel 1 wurde in Polypropylen (PP) ein silbernes Perlglanzpigment (PX1001, Fa. ECKART) in einer Konzentration von 0,05 Gew.-% und Zink-Pulver (Zink-Staub 17640, Fa. Norzinko GmbH, Goßlar, Deutschland) in einer Konzentration von 0,25 Gew.-% und 0,05 Gew. mit PP verarbeitet.
Die Ergebnisse waren vergleichbar mit den in Beispiel. 19 angeführten, jedoch waren hierbei etwas verminderte Punktgenauigkeiten zu beobachten. Die Platten blieben in den genannten Konzentrationen transparent, es war jedoch bereits die Ausbildung von Fließlinien zu beobachteten.

Die Ergebnisse der Beispiele 19 und 20 zeigen gegenüber jenen der Vergleichsbeispiele 17 und 18 deutlich die Vorteile bei Verwendung von Metallpartikeln ohne oder mit nur geringen Mengen an Perlglanzpigmenten auf. Den Ergebnissen der beiden Vergleichsbeispiele 17 und 18 kann kein Vorteil durch Verwendung von Zinkpulver entnommen werden.
Ein Vergleich der beiden Beispiele 19 und 20 zeigt, dass Fließlinien auch schon bei geringen Mengen an Perlglanzpigmenten auftreten können.

In den nachstehenden Beispielen 21 bis 24 wird die besondere Eignung von Metallpartikeln als Laserschweißbarkeitsmittel aufgezeigt.

### Beispiel 21:

Ein Pulver aus sphärischen Aluminiumpartikeln mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurde in einer 0,05 Gew.-%i-gen Mischung mit thermoplastischem Polypropylen (R 771 - 10; Fa. DOW, USA) im Spritzgussverfahren zu Platten (analog zu Beispiel 1, Fläche 42 × 60 mm, Dicke 1 mm) verarbeitet.

Eine so erhaltene Platte wurde mit einer entsprechend unpigmentierten Platte aus thermoplatischen Polypropylen (R 771 - 10; Fa. DOW, USA) bedeckt und mittels eines Nd:YAG-Lasers (1064 nm; 8 W, Impulsfrequenz 5 KHz; Schreibgeschwindigkeit 50 mm/s) eine Fläche 10 × 10 mm bestrahlt. Dadurch konnte ein Verschmelzen der Platten an deren Kontaktfläche im bestrahlten Bereich herbeigeführt werden. Die Verschweißung konnte nur unter Kraftaufwendung wieder getrennt werden.

### Vergleichsbeispiel 22:

Analog Beispiel 20 wurden mit zwei unpigmentierten Platten aus thermoplastischen Polypropylen (R 771 - 10; Fa. DOW, USA) verfahren. Dadurch konnte keine Verschmelzung der Kunststoffplatten herbeigeführt werden.

### Beispiel 23:

Ein Pulver aus sphärischen Aluminiumpartikeln mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurden in einer 0,5% Gew.-%igen Mischung mit Polyethylen niedriger Dichte (LDPE) (LDPE 410-E, Fa. DOW, USA) zu Blasfolien mit einer Dicke von 100 µm mittels einem Folienextruder Typ: Scientific, Fa LabTech, Thailand) verarbeitet. Ein Folienstück (110 × 70 mm) wurde mit entsprechend unpigmentierter LDPE-Folie bedeckt und analog zu Beispiel 20 behandelt. Dadurch konnte ein Verschmelzen der Folien an deren Kontaktfläche im bestrahlten Bereich herbeigeführt werden. Die Verschweißung konnte nur unter Kraftaufwendung und unter Zerstörung der Folien am Ort der Verschmelzung wieder getrennt werden.

### Vergleichsbeispiel 24:

Analog Beispiel 22 wurden mit zwei unpigmentierten Folien aus Polyethylen niedriger Dichte (LDPE) (LDPE 410-E, Fa. DOW, USA) verfahren. Dadurch konnte keine Verschmelzung der Kunststofffolien herbeigeführt werden.

## Patentansprüche

1. Verwendung von sphärischen Metallpartikeln, die frei von Antimon und/oder Antimon-haltigen Verbindungen sind, als Lasermarkierungsadditiv in einem Dichtungs-, Verschluss- oder Beschichtungsmaterial aus Kunststoff oder einem Lack aus Kunststoff, wobei die mittels Lasergranulometrie bestimmte Korngrößenverteilung der sphärischen Metallpartikel, in der Form der Volumen-gemittelten Summendurchgangskorngrößenverteilung, einen D₉₉-Wert von < 110 µm, einen D₉₀-Wert von < 75 µm und einen D₅₀ < 45 µm aufweisen.

2. Verwendung von sphärischen Metallpartikeln als Lasermarkierungsadditiv nach Anspruch 1,
**dadurch gekennzeichnet,**
**dass** der Kunststoff des Dichtungs- oder Verschlussmaterials ein thermoplastisches Polymer, ein Elastomer, ein thermoplastisches Elastomer, oder ein thermoplastisches Vulkanisat ist.

3. Verwendung von sphärischen Metallpartikeln als Lasermarkierungsadditiv nach Anspruch 1 oder 2,
**dadurch gekennzeichnet,**
**dass** der Kunststoff des Dichtungs- oder Verschlussmaterials aus Polyethylen, einem Copolymer aus Ethylen mit anderen Niederalkenen, Polypropylen, thermoplastischen Elastomeren, Ethylen-Propylen-Copolymeren, Säure-modifizierten Ethylen-Propylen-Copolymeren, Styrol/Butadien-Elstomer, carboxyliertem Styrol/Butadien, Polyisopren, Styrol/Isopren/Styrol-Blockcopolymeren, Styrol/Butadien/Styrol-Blockcopolymeren, Styrol/Ethylen/Butylen/Styrol-Blockcopolymeren, Polystyrol/Polyethylene/propylen-Blockcopolymeren, Polystyrol/Polyethylen/propylen/Polystyrol-Blockcopolymeren, Polystyrol/Polyethylen/propylen/Styrol-Blockcopolymeren, Polystyrol, Ethylen/Vinylacetat-Copolymeren und -Terpolmeren, Ethylenacrylat-Copolymeren und -Terpolymeren, Ethylen/Vinylalkohol-Copolymeren, Butylelastomeren, Ethylen-Copolymeren aus Ethylen und einem säurehaltigen Olefin, Polyvinylchloridpolymeren oder Gemischen davon ausgewählt ist.

4. Verwendung von sphärischen Metallpartikeln als Lasermarkierungsadditiv nach einem der Ansprüche 1 bis 3,
**dadurch gekennzeichnet,**
**dass** der Kunststoff des Dichtungs- oder Verschlussmaterials aus PVC, thermoplastischen Olefinen, und thermoplastischen Vulkanisaten ausgewählt ist.

5. Verwendung von sphärischen Metallpartikeln als Lasermarkierungsadditiv nach einem der Ansprüche 1 bis 4,
**dadurch gekennzeichnet,**
**dass** der Kunststoff des Dichtungs- oder Verschlussmaterials aus LDPE, HDPE, PP und Copolymeren davon, Copolymeren von Ethylen, den Styrol-Copolymeren SIBS, SBS, SEBS, TPE oder TPV ausgewählt ist.

6. Verwendung von sphärischen Metallpartikeln als Lasermarkierungsadditiv nach Anspruch 1,
**dadurch gekennzeichnet,**
**dass** der Kunststoff des Beschichtungsmaterials aus Acrylpolymeren, Styrolpolymeren und hydrierten Produkten davon, Vinylpolymeren, Polyolefinen und hydrierten oder epoxidierten Produkten davon, Aldehydpolymeren, Epoxidpolymeren, Polyamiden, Polyestern, Polyurethanen, Polymeren auf Sulfonbasis, natürlichen Polymeren und Derivaten davon oder aus Gemischen davon ausgewählt ist.

7. Verwendung von sphärischen Metallpartikeln als Lasermarkierungsadditiv nach Anspruch 1 oder 6,
**dadurch gekennzeichnet,**
**dass** der Kunststoff des Beschichtungsmaterials aus Polyestern oder Epoxylacken ausgewählt ist.

8. Verwendung von sphärischen Metallpartikeln als Lasermarkierungsadditiv nach Anspruch 1,
**dadurch gekennzeichnet,**
**dass** der Kunststoff des Lacks aus Alkydharz, Chlorkautschuk, Epoxidharz, Acrylatharz, Polyester, Polyurethan, oder einer Kombination auf Cellulosenitrat- und Alkydharzbasis ausgewählt ist.

9. Verwendung von sphärischen Metallpartikeln als Lasermarkierungsadditiv nach einem der vorhergehenden Ansprüche,
**dadurch gekennzeichnet,**
**dass** die Summendurchgangskorngrößenverteilung der sphärischen Metallpartikel einen D₉₉-Wert von < 70 µm und einen D₉₀-Wert von < 40 µm, vorzugsweise einen D₉₉-Wert von < 65 µm und einen D₉₀-Wert von < 36 µm aufweisen.

10. Verwendung von sphärischen Metallpartikeln als Lasermarkierungsadditiv nach einem der vorhergehenden Ansprüche,
**dadurch gekennzeichnet,**
**dass** die Metallpartikel Metalle enthalten oder aus diesen bestehen, die aus der Gruppe, die aus Aluminium, Kupfer, Silber, Gold und Zink, Zinn, Eisen, Titan, Vanadium, Magnesium und Legierungen davon besteht, ausgewählt wird.

11. Verwendung von sphärischen Metallpartikeln als Lasermarkierungsadditiv nach einem der vorhergehenden Ansprüche,
**dadurch gekennzeichnet,**
**dass** die Metallpartikel einen Metalloxidgehalt von nicht mehr als 10 Gew-%, bezogen auf das Gesamtgewicht der Metallpartikel, aufweisen.

12. Verwendung von sphärischen Metallpartikeln als Lasermarkierungsadditiv nach einem der vorhergehenden Ansprüche,
**dadurch gekennzeichnet,**
**dass** die Metallpartikel mit wenigstens einer anorganischen Metalloxidschicht versehen sind.

13. Verwendung von sphärischen Metallpartikeln als Lasermarkierungs- oder Laserschweißbarkeitsadditiv nach Anspruch 12
**dadurch gekennzeichnet,**
**dass** die Metalloxidschicht SiO₂ enthält oder aus SiO₂ besteht.

14. Lasermarkierbares Dichtungs- oder Verschlussmaterial, welches ein Dichtungs- oder Verschlussmaterial aus Kunststoff nach einem der Ansprüche 1 bis 4 und 9 bis 13 enthält.

15. Lasermarkierbares Dichtungs- oder Verschlussmaterial nach Anspruch 14,
**dadurch gekennzeichnet,**
**dass** das lasermarkierbare Dichtungsmaterial ein Dichtungsmaterial für einen Kronkorken, eine Kappe, einen Drehverschluss, einen Glasstopfen, einen Sprühkopf, einen Ausgießer, eine Staubschutzkappe, einen Verschluss für Aerosolkappen, einen Ventilverschluss oder einen Sportgetränkeverschluss ist, oder das lasermarkierbare Verschlussmaterial eine Kappe, ein Kunststoff-Korken, ein Drehverschluss, eine Staubschutzkappe, ein Verschluss für Aerosolkappen, ein Ventilverschluss oder ein Sportgetränkeverschluss ist.

16. Lasermarkierbares Beschichtungsmaterial oder lasermarkierbarer Lack, enthaltend ein Beschichtungsmaterial oder einen Lack aus Kunststoff nach einem der Ansprüche 1 und 5 bis 13.

17. Lasermarkierbarer Lack nach Anspruch 16,
**dadurch gekennzeichnet,**
**dass** der Lack ein Pulverlack, ein physikalisch trocknender Lack, ein strahlenhärtbarer Lack oder ein- oder mehrkomponentiger Reaktivlack ist.

18. Lasermarkierbares Beschichtungsmaterial nach Anspruch 16 oder 17,
**dadurch gekennzeichnet,**
**dass** der Lack ein Heißsiegellack, Schutzlack oder Druckvorlack für Deckelfolien von Lebensmittel und Kunststoffverpackungen oder für Pharma-Blisterfolien, ein sterilisationsbeständiger Heißsiegel-, Schutz- oder Druckvorlack für Al-Leichtbehälter und Deckelfolien, ein Innen- oder Außenschutzlack für Menüschalen, ein sterilisationsbeständiger Schutzlack für Pharma-Verschlüsse, ein Haftlack oder abriebfester Außenlack für Aluminium-Drehverschlüsse, ein Außenschutz- und PU-Haftlack für Isolatorplatten, oder ein Hydrophilik- oder Außenschutzlack für Wärmetauscherlamellen, ein Haftlack oder abriebfester Außenlack für Kronkorken und Verschlüsse, ein Innenschutz- und Außenlack für Konservendosen, ein Innen- oder Außenschutzlack, sterilisationsfester Heißsiegellack oder Dichtungsmasse für Standard-, EOE- und peelbare Konservendosendeckel, ein Lack oder Dichtungsmasse für Aerosoldosen, ein hochflexibler und abriebfester Schutzlack für Schmuck- oder Zigarrendosen, oder ein Innenschutz- oder Außenschutzlack für technische Verpackungen ist.

19. Lasermarkierbares Dichtungs- oder Verschlussmaterial nach einem der Ansprüche 14 bis 16 oder lasermarkierbares Beschichtungsmaterial oder lasermarkierbarer Lack nach einem der Ansprüche 17 und 18,
**dadurch gekennzeichnet,**
**dass** der Anteil der Metallpartikel in dem Kunststoff 0,0005 bis 0,8 Gew.-%, vorzugsweise 0,001 bis 0,5 Gew.-%, stärker bevorzugt 0,005 bis 0,5 Gew.-%, noch stärker bevorzugt 0,01 bis 0,1 Gew.-%, jeweils bezogen auf das Gesamtgewicht des Kunststoffs beträgt.

20. Markierter Gegenstand, erhältlich durch Markieren eines Dichtungs- oder Verschlussmaterials nach einem der Ansprüche 14 bis 16 oder 19 oder eines Beschichtungsmaterials oder Lacks nach einem der Ansprüche 17 bis 19 durch Bestrahlen mit einem Laser.

21. Markierter Gegenstand nach Anspruch 20,
**dadurch gekennzeichnet,**
**dass** die Markierung nicht mit bloßem Auge wahrnehmbar ist.

## Claims

1. Use of spherical metal particles which are free from antimony and/or from compounds containing antimony as laser marking additive in a sealing material, closure material or coating material made of plastic material or in a paint made of plastic material, wherein the particle-size distribution of the spherical metal particles as determined by means of laser granulometry in the form of the volume-averaged cumulative-undersize particle-size distribution has a D₉₉ of < 110 µm, a D₉₀ of < 75 µm and a D₅₀ of < 45 µm.

2. Use of spherical metal particles as laser marking additive according to claim 1, **characterized in that**, the plastic material of the sealing material or closure material is a thermoplastic polymer, an elastomer, a thermoplastic elastomer, or a thermoplastic vulcanizate.

3. Use of spherical metal particles as laser marking additive according to claim 1 or claim 2, **characterized in that** the plastic material of the sealing material or closure material is selected from polyethylene, a copolymer of ethylene with lower alkenes, polypropylene, thermoplastic elastomers, ethylene-propylene-copolymers, acid-modified ethylene-propylene-copolymers, styrene/butadiene-elastomer, carboxylated styrene/butadiene, polyisoprene, styrene/isoprene/styrene-block copolymers, styrene/butadiene/styrene-block copolymers, styrene/ethylene/butylene/styrene-block copolymers, polystyrene/polyethylene/propylene-block copolymers, polystyrene/polyethylene/propylene/polystyrene-block copolymers, polystyrene/polyethylene/propylene/styrene-block copolymers, polystyrene, ethylene/vinyl acetate-copolymers and -terpolymers, ethylene acrylate-copolymers and -terpolymers, ethylene/vinyl alcohol-copolymers, butyl elastomers, ethylene-copolymers made of ethylene and an acid containing olefin, polyvinylchloride polymers or mixtures thereof.

4. Use of spherical metal particles as laser marking additive according to anyone of claims 1 to 3, **characterized in that** the plastic material of the sealing material or closure material is selected from PVC, thermoplastic olefins and thermoplastic vulcanizates.

5. Use of spherical metal particles as laser marking additive according to anyone of claims 1 to 4, **characterized in that** the plastic material of the sealing material or closure material is selected from LDPE, HDPE, PP and copolymers thereof, copolymers of ethylene, the styrene-copolymers SIBS, SBS, SEBS, TPE or TPV.

6. Use of spherical metal particles as laser marking additive according to claim 1, **characterized in that** the plastic material of the coating material is selected from acryl polymers, styrene polymers and hydrogenated products thereof, vinyl polymers, polyolefins and hydrogenated or epoxidized products thereof, aldehyde polymers, epoxide polymers, polyamides, polyesters, polyurethanes, polymers on the basis of sulphone, natural polymers and derivatives thereof or mixtures thereof.

7. Use of spherical metal particles as laser marking additive according to claim 1 or 6, **characterized in that** the plastic material of the coating material is selected from polyesters or epoxy paints.

8. Use of spherical metal particles as laser marking additive according to claim 1, **characterized in that** the plastic material of the paint is selected from alkyd resin, chlorinated rubber, epoxy resin, acrylate resin, polyester, polyurethane or a combination of cellulose nitrate base and alkyd resin base.

9. Use of spherical metal particles as laser marking additive according to anyone of the preceding claims, **characterized in that** the cumulative-undersize particle-size distribution of the spherical metal particles has a D₉₉ of < 70 µm and a D₉₀ of < 40 µm, preferably a D₉₉ of < 65 µm and a D₉₀ of < 36 µm.

10. Use of spherical metal particles as laser marking additive according to anyone of the preceding claims, **characterized in that**, the metal particles contain metals or consist of metals selected from the group consisting of aluminum, copper, silver, gold and zinc, tin, iron, titanium, vanadium, magnesium and alloys thereof.

11. Use of spherical metal particles as laser marking additive according to anyone of the preceding claims, **characterized in that** the metal particles have a metal oxide content of not more than 10 weight percent based on the total weight of the metal particles.

12. Use of spherical metal particles as laser marking additive according to anyone of the preceding claims, **characterized in that** the metal particles have at least an inorganic metal oxide layer.

13. Use of spherical metal particles as laser marking additive or laser welding additive according to claim 12, **characterized in that** the metal oxide layer contains SiO₂ or consists of SiO₂.

14. Laser markable sealing material or closure material containing a sealing material or closure material made of plastic material according to anyone of claims 1 to 4 and 9 to 13.

15. Laser markable sealing material or closure material according to claim 14, **characterized in that** the laser markable sealing material is a sealing material for a crown cap, a cap, a screw cap, a glass stopper, a spray head, a nozzle, a dust cover, a closure for aerosol caps, a valve closure or a closure for sports beverages, or the laser markable closure material is a cap, a plastic cork, a screw cap, a dust cover, a closure for aerosol caps, a valve closure or a closure for sports beverages.

16. Laser markable coating material or laser markable paint containing a coating material or a paint made of plastic material according to anyone of claims 1 and 5 to 13.

17. Laser markable paint according to claim 16,
**characterized in that** the paint is a powder coating, a physical drying paint, a radiation curable paint or a reactive paint of one or more components.

18. Laser markable coating material according to claims 16 or 17,
**characterized in that** the paint is heat-seal paint, protective paint or print primer paint for cover films for food and plastic packages or pharmaceutical blister films, a sterilization resistant heat-seal paint, protective paint or print primer paint for lightweight containers of Aland cover films, an inner or outer protective paint for meal trays, a sterilization resistant protective paint for pharmaceutical closures, an adhesive paint or abrasion resistant outer paint for screw caps of aluminum, an outer protective paint and PU adhesive paint for isolating plates or a hydrophilic paint or outer protective paint for heat exchanger lamellae, an adhesive paint or abrasion resistant outer paint for crown caps and closures, an inner protective paint and outer paint for cans, an inner paint or outer protective paint, sterilization resistant heat-seal paint or sealing compound for standard-, EOE- and peelable can closure heads, a paint or sealing compound for aerosol cans, a highly flexible and abrasion resistant protective paint for cans for jewels and cigars or an inner protective paint or outer protective paint for technical packages.

19. Laser markable sealing material or closure material according to anyone of claims 14 to 16 or laser markable coating material or laser markable paint according to anyone of claims 17 and 18, **characterized in that** the content of the metal particles in the plastic material is 0.0005 to 0.8 weight percent, preferably 0.001 to 0.5 weight percent, more preferably 0.005 to 0.5 weight percent, yet more preferably 0.01 to 0.1 weight percent, each based on the total weight of the plastic material.

20. Marked article obtainable by marking a sealing material or closure material according to anyone of claims 14 to 16 or 19 or the coating material or paint according to anyone of claims 17 to 19 by irradiating with a laser.

21. Marked article according to claim 20, **characterized in that** the marking cannot be observed with a naked eye.

## Revendications

1. L'utilisation de particules métalliques sphériques qui sont exemptes d'antimoine et / ou de composés contenant de l'antimoine, comme additive de marquage au laser dans un matériaux d'étanchéité, de fermeture ou de recouvrement ou un vernis en matière en plastique, où la distribution de la taille des grains des particules métalliques sphériques qui est déterminée au moyen de la granulométrie au laser, présente sous la forme d'une distribution de la taille des particules cumulée dont on a déterminé la moyenne sur le volume une valeur D₉₉ < 110 µm, une valeur D₉₀ < 75 µm et une valeur D₅₀ < 45 µm.

2. L'utilisation de particules métalliques sphériques comme additive de marquage au laser selon la revendication 1, **caractérisée en ce que** la matière plastique du matériau d'étanchéité ou de fermeture est un polymère thermoplastique, un élastomère, un élastomère thermoplastique ou un vulcanisat thermoplastique.

3. L'utilisation de particules métalliques sphériques comme additive de marquage au laser selon la revendication 1 ou 2, **caractérisée en ce que** la matière en plastique du matériau d'étanchéité ou de fermeture est choisi parmi le polyéthylène, un copolymère en éthylène avec d'autres alkènes inférieurs, polypropylène, des élastomères thermoplastiques, des copolymères d'éthylène-propylène, des copolymères d'éthylène-propylène modifiés par un acide, un élastomère styrole / butadiène, styrole / butadiène carboxylé, polyisoprène, des copolymères blocs de styrole / isoprène / styrole, des copolymères blocs de styrole / butadiène / styrole, des copolymères blocs de styrole / éthylène / butylène / isoprène / styrole, des copolymères blocs de polystyrole / polyéthylène / propylène, des copolymères blocs de polystyrole / polyéthylène / propylène / polystyrole, des copolymères blocs de polystyrole / polyéthylène / propylène / styrole, polystyrole, des copolymères et terpolymères d'éthylène / acétate de vinyle, des copolymères et terpolymères d'acrylate d'éthylène, des copolymères éthylène / alcool vinylique, des élastomères butyliques, des copolymères d'éthylène en éthylène, et un oléfine contenant de l'acide, des polymères de chlorure polyvinylique et des mélanges des composés cités ci-dessus.

4. L'utilisation de particules métalliques sphériques comme additive de marquage au laser selon les revendications 1 à 3, **caractérisée en ce que** la matière plastique du matériau d'étanchéité ou de fermeture est choisie parmi le PVC, les oléfines thermoplastiques, et des vulcanisats thermoplastiques.

5. L'utilisation de particules métalliques sphériques comme additive de marquage au laser selon les revendications 1 à 4, **caractérisée en ce que** la matière plastique du matériau d'étanchéité ou de fermeture est choisie parmi le LDPE, HDPE, PP et les copolymères de ces composés, les copolymères d'éthylène, les copolymères de styrole SIBS, SBS, SEBS, TPE ou TPV.

6. L'utilisation de particules métalliques sphériques comme additive de marquage au laser selon la revendication 1, **caractérisée en ce que** la matière plastique du matériau de revêtement est choisi est choisi parmi les polymères acryliques, les polymères de styrole et les produits hydratés des polymères de styrole, les polymères vinyliques, les polyoléfines et les produits hydratés et époxydés des polyoléfines, les polymères d'aldéhyde, les polymères d'époxyde, les polyamides, les polyesters, les polyuréthanes, les polymères à base de sulfone, les polymères naturels et les dérivés des dits polymères ou les mélanges des composés cité ci-dessus.

7. L'utilisation de particules métalliques sphériques comme additive de marquage au laser selon la revendication 1 ou 6, **caractérisée en ce que** la matière plastique du matériau de revêtement est choisie parmi des polyesters ou des vernis epoxy.

8. L'utilisation de particules métalliques sphériques comme additive de marquage au laser selon la revendication 1, **caractérisée en ce que** la matière plastique du vernis est choisie parmi la résine d'alkyde, le caoutchouc chlorique, la résine époxy, la résine d'acrylate, le polyester, le polyuréthane, ou une combinaison sur la base de nitrate de cellulose et de résine d'alkyde.

9. L'utilisation de particules métalliques sphériques comme additive de marquage au laser selon une des revendications précédentes, **caractérisée en ce que** la distribution de la taille des particules cumulée des particules métalliques sphériques présente une valeur D99 < 70 µm et une valeur D90 < 40 µm, de préférence une valeur D99 < 65 µm et une valeur D90 < 36 µm.

10. L'utilisation de particules métalliques sphériques comme additive de marquage au laser selon une des revendications précédentes, **caractérisée en ce que** les particules métalliques comportent des métaux ou est composés de métaux, lesquels métaux sont choisis du groupe composé de aluminium, cuivre, argent, or et zinc, étain, titane, vanadium, magnésium et des alliages de ces métaux.

11. L'utilisation de particules métalliques sphériques comme additive de marquage au laser selon une des revendications précédentes, **caractérisée en ce que**, les particules métalliques présentent un contenu en oxyde de métal de plus de 10 pour cent en poids, par rapport au poids total des particules métalliques.

12. L'utilisation de particules métalliques sphériques comme additive de marquage au laser selon une des revendications précédentes, **caractérisée en ce que** les particules métalliques comportent au moins une couche d'oxyde de métal inorganique.

13. L'utilisation de particules métalliques sphériques comme additive de marquage au laser selon la revendication 12, **caractérisé en ce que** la couche d'oxyde de métal comporte SiO₂ ou est composée de métal.

14. Matériau d'étanchéité ou de fermeture, susceptible d'être marqué au laser, comportant un matériau d'étanchéité ou de fermeture en matière plastique selon une des revendications 1 à 4 et de 9 à 13.

15. Matériau d'étanchéité ou de fermeture, susceptible d'être marqué au laser selon la revendication 14, **caractérisé en ce que** le matériau d'étanchéité est un matériau d'étanchéité pour une capsule, un chapeau, un bouchon à vis, un bouchon en verre, une buse de pulvérisation, un bec verseur, un chapeau de protection contre la poussière, un bouchon pour des chapeaux de aérosol, un bouchon pour une valve ou un bouchon pour des boissons énergisantes, ou le matériau de fermeture susceptible d'être marqué au laser est un chapeau, un bouchon en matière plastique, un bouchon à vis, un chapeau de protection contre la poussière, un bouchon pour des chapeaux de aérosol, un bouchon pour une valve ou un bouchon pour des boissons énergisantes.

16. Matériau de revêtement susceptible d'être marqué au laser ou un vernis susceptible d'être marqué au laser, comportant un matériau de revêtement ou un vernis en matière plastique selon une des revendications 1 et 5 à 13.

17. Vernis susceptible d'être marqué au laser selon la revendication 16, **caractérisé en ce que** le vernis est un vernis à poudre, un vernis qui est physiquement sec, un vernis qui est susceptible, d'être durci au moyen d'un rayonnement, ou un vernis réactif à un ou plus de composants.

18. Matériau de revêtement susceptible d'être marqué au laser selon la revendication 16 ou 17, **caractérisé en ce que** le vernis est un vernis à chaud, un vernis de protection ou un vernis d'apprêt d'impression pour des feuilles de couvercle de produits de nourriture, et des emballages en matière plastique ou des feuilles de blister pharmaceutiques, des récipients légers et des feuilles de couvercle, un vernis de protection intérieur ou extérieur pour des coupelles de menu, un vernis de protection résistant à la stérilisation, pour des fermetures pharmaceutiques, un vernis d'adhérence ou un vernis extérieur résistant à l'abrasion pour des bouchons à vis en aluminium, un vernis pour la protection extérieure et un vernis d'adhérence en PU pour des plaques d'isolation, un vernis hydrophile ou un vernis pour la protection extérieure pour les lamelles des échangeurs de chaleur, un vernis d'adhérence ou un vernis pour l'extérieur résistant à l'abrasion pour des capsules et des bouchons de fermeture, un vernis pour la protection intérieure et un vernis extérieur pour des boites de conserves, un vernis de protection pour l'intérieur et l'extérieur, un vernis à chaud résistant à la stérilisation ou une masse d'étanchéité pour des couvercles des boites de conserves standards, EOE et pellables, un vernis ou une masse d'étanchéité pour des bombes d'aérosol, un vernis de protection hautement flexible et résistant à l'abrasion pour des boites de bijoux ou des cigarettes, ou un vernis de protection intérieure ou extérieure pour des emballages technologiques.

19. Matériau d'étanchéité ou de fermeture susceptible d'être marqué au laser selon une des revendications 14 à 16, ou matériau de revêtement susceptible d'être marqué au laser ou vernis susceptible d'être marqué au laser selon une des revendications 17 et 18, **caractérisé en ce que** le contenu des particules métalliques dans la matière en plastique est situé dans la zone entre 0,0005 et 0,5 % en poids, encore de façon plus préférée dans la zone entre 0,01 et 0,1 % en poids, à chaque fois par rapport au poids total de la matière en plastique.

20. Objet marqué susceptible d'être obtenu par le marquage d'un matériau d'étanchéité ou de fermeture selon une des revendications 14 à 16 ou 19, ou d'un matériau de revêtement ou vernis selon une des revendications 17 à 19 par un rayonnement laser.

21. Objet marqué selon la revendication 20, **caractérisé en ce que** le marquage n'est pas perceptible à l'oeil nu.
